# EUROPEAN PATENT SPECIFICATION

(11) **EP 3 686 024 B1**
(45) Date of publication and mention of the grant of the patent: **27.07.2022**
(21) Application number: 18859678.7
(22) Date of filing: 19.09.2018
(51) Int. Cl.: B42D 25/328, B42D 25/373, B42D 25/43, G07D 7/06, B42D 25/29, B42D 25/30

(54) **ANTI-COUNTERFEITING STRUCTURE, ANTI-COUNTERFEITING MEDIUM, AND METHOD FOR EXAMINING ANTI-COUNTERFEITING STRUCTURE**
FÄLSCHUNGSSICHERE STRUKTUR, FÄLSCHUNGSSICHERES MEDIUM UND VERFAHREN ZUR UNTERSUCHUNG EINER FÄLSCHUNGSSICHEREN STRUKTUR
STRUCTURE ANTI-CONTREFAÇON, SUPPORT ANTI-CONTREFAÇON ET PROCÉDÉ D'EXAMEN DE STRUCTURE ANTI-CONTREFAÇON

(30) Priority: 22.09.2017 JP 2017181979
(43) Date of publication of application: 29.07.2020
(73) Proprietor: Glory Ltd., Hyogo 670-8567 (JP)
(72) Inventor: MUTA, Keitaro, Himeji-shi Hyogo 670-8567 (JP)
(74) Representative: SSM Sandmair
(86) International application number: PCT/JP2018/034601
(87) International publication number: WO 2019/059218

(56) References cited:
- WO-A2-2012/094436
- JP-A- 2016 000 498
- JP-A- 2016 000 498
- JP-A- 2016 091 157
- JP-A- 2016 141 065
- JP-B2- 5 110 566
- US-A1- 2016 259 959
- US-A1- 2016 259 959

## Description

### TECHNICAL FIELD

The present invention relates to a forgery prevention structure for preventing forgery, a forgery prevention medium having the forgery prevention structure, and a method for inspecting the forgery prevention structure.

### BACKGROUND ART

Conventionally, forgery prevention structures for preventing forgery have been provided in sheet-like valuable mediums such as banknotes, stock certificates, bonds, checks, and coupons. For example, Patent Literature 1 discloses a technique in which a conductive layer having a split ring resonator (hereinafter, abbreviated as "SRR") is used as a forgery prevention structure. A meta-material formed by a micro SRR which has an outer diameter of about several hundred microns and acts on a terahertz electromagnetic wave, is used for forgery prevention.

Specifically, a conductive layer in which the SRRs having predetermined shapes are arranged at regular intervals into a matrix, is formed such that a transmissivity indicates a predetermined value when a terahertz electromagnetic wave having a specific frequency is applied. The conductive layer is provided inside or on a medium as the forgery prevention structure. Authentication of the medium can be performed based on a value of the transmissivity obtained by the terahertz electromagnetic wave being applied to the forgery prevention structure.

The transmissivity of the terahertz electromagnetic wave transmitted through the conductive layer changes depending on a relationship between a polarization direction of the terahertz electromagnetic wave and a direction of an open part of the SRR. When the conductive layer is divided into a plurality of regions, and the directions of the open parts of the SRRs in the respective regions are made different, a forgery prevention structure in which the transmissivity is different for each region can be achieved. When the transmissivity is measured while each region in the forgery prevention structure is scanned using the terahertz electromagnetic wave, authentication of the medium can be performed by determining whether or not the transmissivity changes according to a transmissivity in each region and a scanning width.

### CITATION LIST

### [PATENT LITERATURE]

[PTL 1] Japanese Laid-Open Patent Publication No. 2016-000498 discloses a forgery prevention structure including a base substrate through which a terahertz microwave can be transmitted, an opening part forming layer disposed on one surface of the base substrate through which a terahertz microwave can be transmitted, and a conductive layer disposed on a surface opposite to the base substrate of the opening part forming layer which blocks a terahertz microwave.

WO 2012/094436 A2 discloses an apparatus comprising a paper-based substrate which includes a pattern conductive structure coupled to the paper-based substrate, wherein the patterned conductive structure corresponds to electromagnetic radiation.

### SUMMARY OF THE INVENTION

### PROBLEMS TO BE SOLVED BY THE INVENTION

However, in the above-described conventional art, high-accuracy authentication of a medium having the forgery prevention structure cannot be performed in some cases. For example, in order to measure a transmissivity of the terahertz electromagnetic wave, positions of a transmitter and a receiver for the terahertz electromagnetic wave are fixed, and the medium is transported such that the forgery prevention structure passes between the transmitter and the receiver. When the medium is transported and the forgery prevention structure formed by the SRRs passes so as to block the terahertz electromagnetic wave that is transmitted by the transmitter and received by the receiver, the transmissivity changes according to the direction of the open part of the SRR. When the medium being transported is tilted (skewed) and an angle between the open part and the polarization direction of the terahertz electromagnetic wave changes, the transmissivity also changes. For example, when a medium is skewed and tilted by an angle of -15 to 15 degrees in a forgery prevention structure designed such that an angle between the open part and the polarization direction of the terahertz electromagnetic wave is 60 degrees, the transmissivity has a value varying between 30% and 60%. The authentication is performed by comparing the value of the transmissivity with a threshold value. However, when the threshold value is set so as to allow such a great variation in transmissivity, high-accuracy authentication cannot be performed.

The variation range of the transmissivity in a tilted medium depends on the direction of the open part of the SRR. In the above-described conventional art, the forgery prevention structure is divided into a plurality of regions, and the direction of the open part is set to be different for each region. In this case, when the medium is skewed and tilted, the transmissivity in each region varies in a different variation range depending on the direction of the open part. Therefore, the change of the transmissivity observed by scanning the forgery prevention structure may be different from a change to be observed, and high-accuracy authentication may not be performed. That is, similarly to the SRR, in a resonator structure in which a transmissivity changes according to change of an angle between the polarization direction of the terahertz electromagnetic wave and the resonator structure, high-accuracy authentication may not be performed when a medium is tilted.

An object of the present invention is to overcome the problem of the aforementioned conventional art, and to provide a forgery prevention structure, a forgery prevention medium, and a method for inspecting the forgery prevention structure, which are capable of high-accuracy authentication.

### SOLUTION TO THE PROBLEMS

In order to overcome the aforementioned problem and to attain the object, the present invention is directed to a forgery prevention structure and a method for inspecting a forgery prevention structure according to the independent claims.

### ADVANTAGEOUS EFFECTS OF THE INVENTION

According to the present invention, as compared with a forgery prevention structure in which split ring resonators in the same region have respective open parts in the same direction, a transmissivity is inhibited from changing when the forgery prevention structure is tilted and high-accuracy authentication can be performed.

### BRIEF DESCRIPTION OF THE DRAWINGS

- [ FIG. 1] FIG. 1 illustrates an example of a forgery prevention structure.
- [ FIG. 2] FIG. 2 illustrates a shape of a split ring resonator.
- [ FIG. 3] FIG. 3 illustrates an example of frequency characteristics of transmissivity which are obtained by irradiating a terahertz electromagnetic wave to a region in which the split ring resonator is disposed.

[FIG. 4] FIGS. 4A and 4B illustrate other shapes of a resonator structure.
[FIG. 5] FIGS. 5A and 5B each illustrates a relationship between a terahertz electromagnetic wave and the resonator structures.
[FIG. 6] FIGS. 6A to 6D illustrate basic patterns.
[FIG. 7] FIGS. 7A and 7B illustrate examples of basic patterns other than examples shown in FIGS. 6A to 6D.
[FIG. 8] FIGS. 8A to 8C illustrate examples of patterns each formed by a plurality of kinds of split ring resonators.
[FIG. 9] FIG. 9 illustrates an example of another pattern formed by a plurality of kinds of split ring resonators.
[FIG. 10] FIG. 10 illustrates an example of a transmissivity at the forgery prevention structure.
[FIG. 11] FIG. 11 illustrates an example of a forgery prevention structure in which a plurality of kinds of patterns are combined.
[FIG. 12] FIG. 12 illustrates another pattern obtained by rotation of one of the patterns shown in FIG. 8.
[FIG. 13] FIG. 13 illustrates change of a transmissivity of a terahertz electromagnetic wave, which is observed in a forgery prevention medium having the forgery prevention structure shown in FIG. 11.
[FIG. 14] FIG. 14 illustrates change of a transmissivity obtained at a secondary resonance frequency.
[FIG. 15] FIG. 15 is a schematic diagram illustrating an internal structure of an authentication apparatus as viewed from the side thereof.
[FIG. 16] FIGS. 16A and 16B are schematic diagrams illustrating the structure shown in FIG. 15 as viewed from thereabove.
[FIG. 17] FIG. 17 is a block diagram illustrating a schematic functional configuration of the authentication apparatus.
[FIG. 18] FIG. 18 is a schematic cross-sectional view of another structural example of the forgery prevention structure.
[FIG. 19] FIG. 19 illustrates an example of a forgery prevention structure which includes split ring resonators having open parts in different directions.
[FIG. 20] FIG. 20 illustrates another example of a forgery prevention structure which is divided into a plurality of regions.
[FIG. 21] FIG. 21 illustrates an example of a forgery prevention structure in which a transmissivity continuously changes.
[FIG. 22] FIG. 22 illustrates kinds of basic patterns that form a forgery prevention structure 160 shown in FIG. 21.

### DESCRIPTION OF EMBODIMENTS

A forgery prevention structure, a forgery prevention medium, and a method for inspecting the forgery prevention structure according to the present invention will be described below in detail with reference to the accompanying drawings. The present invention has a feature in which a resonator structure such as a split ring resonator (hereinafter, abbreviated as "SRR") is used such that a transmissivity of a terahertz electromagnetic wave transmitted through the forgery prevention structure indicates a predetermined value.

When a polarized terahertz electromagnetic wave is irradiated to the resonator structure, and a transmissivity is obtained by measurement of an intensity of the transmitted terahertz electromagnetic wave, the transmissivity changes according to a frequency of the terahertz electromagnetic wave. This is because the resonator structure resonates with a terahertz electromagnetic wave in a specific frequency domain. The change of the transmissivity is different depending on a method of forming the resonator structure, and a transmissivity at a frequency at which the resonator structure resonates indicates a lower value in some cases and a higher value in other cases, as compared with a transmissivity at a frequency at which the resonator structure does not resonate. Hereinafter, a frequency domain in which the resonator structure resonates to change a transmissivity is referred to as a resonance frequency.

When the shape of the resonator structure is changed, a resonance frequency also changes. The width of the resonance frequency is also different depending on the resonator structure, and may be narrow in some cases and wide in the other cases. Hereinafter, in an exemplary case where the width of the resonance frequency is relatively narrow, a frequency at which the transmissivity indicates a (maximum or minimum) peak is described as a resonance frequency. However, the resonance frequency includes not only a single frequency but also the neighboring frequencies. The width of the resonance frequency can be represented based on a peak value. For example, when a relationship between a frequency and a transmissivity is represented as a graph, a width (half value width) at which the transmissivity is 50% of the peak value may be the width of the resonance frequency. When the width of the resonance frequency is wide, the width at which the transmissivity is 90% or 80% of the peak value may be set as the width of the resonance frequency.

The SRR has a ring shape having an open part (split). The ring shape is a ring-like shape having an open part, such as an almost C-like shape that is an annular shape with an open part, or a quadrangular-ring-like shape with an open part. A conductive material is formed, into the shape of the resonator structure such as the ring shape of the SRR, on a sheet of an insulating material, thereby forming the resonator structure. When a polarized terahertz electromagnetic wave is irradiated to the resonator structure such as the SRR which is formed in this manner, a transmissivity of the terahertz electromagnetic wave changes according to a frequency and a polarization direction of the terahertz electromagnetic wave. A transmissivity of a terahertz electromagnetic wave with which the resonator structure resonates indicates a value less than a transmissivity of a terahertz electromagnetic wave with which the resonator structure does not resonate.

For example, a sheet of a conductive material is cut out to form a through groove having the shape of the resonator structure such as a ring shape having an open part, thereby forming the resonator structure such as the SRR. The SRR formed by cutting out the conductive material is particularly called a complementary split ring resonator (CSRR). Also, in a case where a sheet of a conductive material is cut out to form the resonator structure, when a terahertz electromagnetic wave is irradiated to the resonator structure, a transmissivity of the terahertz electromagnetic wave transmitted through the sheet changes according to a frequency and a polarization direction of the terahertz electromagnetic wave. A transmissivity of the terahertz electromagnetic wave with which the resonator structure resonates indicates a value higher than a transmissivity of a terahertz electromagnetic wave with which the resonator structure does not resonate.

By forming a region including multiple resonator structures, a transmissivity of a terahertz electromagnetic wave having a specific frequency in the region can be controlled. The resonator structures may be arranged into a matrix-like pattern in which the multiple resonator structures are aligned at regular intervals in the longitudinal and transverse directions, a checkered pattern, or a honeycomb-shaped pattern.

As a method of forming a region in which a predetermined transmissivity is indicated, a method of forming, on a sheet of an insulating material, the resonator structure having a predetermined shape by using a conductive material, and a method of cutting out a sheet of a conductive material into a predetermined shape to form the resonator structure, can be used. In either method, a region in which the transmissivity of the terahertz electromagnetic wave indicates a predetermined value can be formed. In the present embodiment, an exemplary case where a conductive material is cut out to form the resonator structure will be described.

The forgery prevention structure of the present embodiment includes a conductive layer in which a transmissivity indicates a predetermined value when measured by irradiating a terahertz electromagnetic wave which has a predetermined frequency and has a polarization direction in a predetermined direction. At least two kinds of resonator structures are arranged in the conductive layer. The polarization directions of the terahertz electromagnetic waves with which these resonator structures resonate are different in units of 90 degrees. The predetermined direction in the present embodiment represents a direction selected as the polarization direction of a terahertz electromagnetic wave to be irradiated for measuring a transmissivity. The predetermined frequency in the present embodiment represents a frequency (resonance frequency) at which the resonator structure resonates with the terahertz electromagnetic wave and is a frequency selected as a frequency of a terahertz electromagnetic wave to be irradiated for measuring a transmissivity. In order to detect a difference in transmissivity due to the resonator structure, the predetermined frequency is preferably a resonance frequency at which change of a transmissivity is great when a direction in which the resonator structure resonates changes with respect to the predetermined direction (polarization direction). Specifically, the predetermined frequency is preferably in a frequency band including frequencies higher and lower than the frequency at which the transmissivity has its peak. However, when a frequency at which the transmissivity has its peak is stable for each forgery prevention structure, the predetermined frequency may be a single frequency. When variation in detected transmissivity can be allowed, the predetermined frequency may be a frequency other than the frequency at which the transmissivity has its peak.

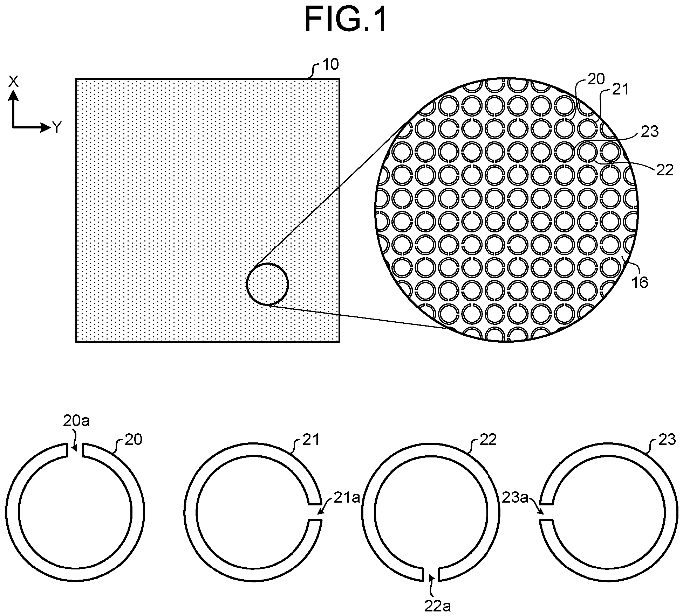

FIG. 1 illustrates an example of a forgery prevention structure 10. In FIG. 1, a plan view of the forgery prevention structure 10 is shown in the upper-left portion, and a partially enlarged view of a part of the forgery prevention structure 10 is shown in the upper-right portion. A plurality of kinds of SRRs 20 to 23 included in the forgery prevention structure 10 are shown on the lower side. The forgery prevention structure 10 is provided in a forgery prevention medium (hereinafter, simply referred to as "medium") that is a sheet-like valuable medium such as a banknote, a stock certificate, a bond, a check, and a coupon. The forgery prevention structure 10 is used to prevent forgery of the medium. Hereinafter, coordinate axes to show correspondence of each drawing are indicated in the drawings such that a polarization direction of a terahertz electromagnetic wave for measuring a transmissivity, and a polarization direction of a terahertz electromagnetic wave with which the resonator structure resonates can be understandable.

A specific example of the forgery prevention structure formed by the resonator structure will be described using the SRR as an example. FIG. 1 shows an example of the forgery prevention structure 10 in which a plurality of kinds of multiple SRRs 20 to 23 having open parts in different directions are arranged into a matrix such that the plurality of kinds of SRRs 20 to 23 are mixed in a predetermined ratio. In such a structure, a transmissivity of a terahertz electromagnetic wave, having a specific frequency, which is transmitted through the forgery prevention structure 10 indicates a predetermined value.

The forgery prevention structure 10 has a conductive layer 16 in which a plurality of kinds of the SRRs 20 to 23 are formed at regular intervals into a matrix. The SRRs 20 to 23 each have an almost C-shape obtained by cutting a part of the ring to form each of open parts 20a to 23a. As shown in FIG. 1, the SRR 20 has the open part 20a in the X-axis positive direction as viewed from the center of the ring, the SRR 21 has the open part 21a in the Y-axis positive direction as viewed from the center of the ring, the SRR 22 has the open part 22a in the X-axis negative direction as viewed from the center of the ring, and the SRR 23 has the open part 23a in the Y-axis negative direction as viewed from the center of the ring. When the SRR 20 is rotated clockwise by 90 degrees, it has the same shape as the SRR 21. When the SRR 21 is rotated clockwise by 90 degrees, it has the same shape as the SRR 22. When the SRR 22 is rotated clockwise by 90 degrees, it has the same shape as the SRR 23. That is, the plurality of kinds of the SRRs 20 to 23 have the open parts in different directions in units of 90 degrees. In the present embodiment, the SRR has a ring shape with the open part and the direction of the open part represents a direction as viewed from the center of the ring of the SRR.

As shown in the partially enlarged view in the upper right portion in FIG. 1, the four kinds of the SRRs 20 to 23 are aligned at regular intervals so as to form a predetermined pattern. Specifically, a basic pattern includes the four SRRs 20 to 23 arranged in two columns and two rows. In the basic pattern, the SRR 21 is disposed to the right (Y-axis positive direction side) of the SRR 20, the SRR 23 is disposed below (X-axis negative direction side) the SRR 20, and the SRR 22 is disposed to the right of the SRR 23. The four kinds of the SRRs 20 to 23 are arranged at regular intervals so as to repeat the basic pattern. The basic pattern formed by the four kinds of the SRRs 20 to 23 will be described below in detail.

The conductive layer 16 made of a conductive material is cut out to form an almost C-shape, thereby forming the SRRs 20 to 23. The four kinds of the SRRs 20 to 23 have the same structure except that the open parts 20a to 23a are formed in different directions (positions on the ring). The SRRs 21 to 23 can be realized by rotating the SRR 20 and therefore, the specific structure will be described by using the SRR 20 as an example.

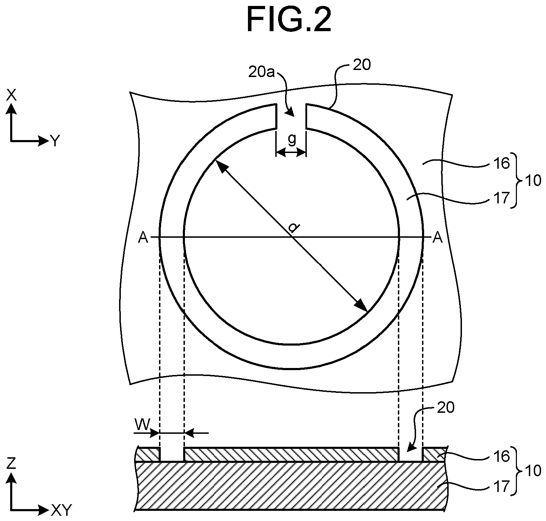

FIG. 2 illustrates the shape of the SRR 20. In FIG. 2, a plan view of the SRR 20 is shown on the upper side, and a cross-sectional view as taken along the line A-A in the plan view is shown on the lower side. The forgery prevention structure 10 includes a base member 17 made of an insulating material, and a thin-film like conductive layer 16 formed on the surface of the base member 17. The base member 17 is made of an insulating material such as paper and resin through which a terahertz electromagnetic wave can be transmitted. Meanwhile, the conductive layer 16 is made of a conductive material such as Al, Fe, Au, Cu, Ag, Mg, Zn, and Sn which blocks the terahertz electromagnetic wave.

The SRR 20 is formed by removing the almost C-shaped region from the conductive layer 16 formed on the base member 17. Specifically, the conductive layer 16 is cut out to leave the open part 20a such that a ring-like shape having a predetermined width in the radial direction is formed, thereby forming the SRR 20. As a result, a region of the almost C-shaped ring portion is formed as a groove, and the surface of the base member 17 is exposed on the bottom surface of the groove. Meanwhile, in a region, other than the ring portion, including the open part 20a, the surface of the base member 17 is left covered with the conductive layer 16. The SRRs 21 to 23 can be formed by changing regions to be left as the open parts 21a to 23a when forming the almost C-shaped groove. A method for forming the SRR on the conductive layer, the function of the SRR, and the like are disclosed in Japanese Laid-Open Patent Publication No. 2016-498 and therefore, a detailed description is omitted.

For example, the sheet-like forgery prevention structure 10 has an about 20 × 20 mm square shape. An inner diameter d of the SRR 20 shown on the upper side in FIG. 2 is about several hundred µm and a width g of the open part 20a is about several ten µm. A width W, in the radial direction, of the SRR 20 shown on the lower side in FIG. 2 is about several ten µm. The SRRs 21 to 23 are also formed to have the same size as the SRR 20. The SRRs 20 to 23 of the forgery prevention structure 10 are continuously arranged at regular intervals into a matrix. An interval between the SRRs 20 to 23 which are adjacent in the upper, lower, left, and right directions is about several ten µm. For example, several tens of the SRRs 20 to 23 are disposed, at regular intervals, within a distance of 10 mm. The shapes and the arrangement of the SRRs 20 to 23 are determined such that, when a terahertz electromagnetic wave having a predetermined frequency is irradiated, resonance occurs and the terahertz electromagnetic wave is transmitted at a predetermined transmissivity. The frequency of the terahertz electromagnetic wave is set, for example, between 0.1 THz and 1 THz. A size of an area in which the conductive layer 16 is irradiated with the terahertz electromagnetic wave is determined according to the SRRs 20 to 23 to be irradiated with the terahertz electromagnetic wave, and the size is about 1 mm to 5 mm in diameter at the half value width.

FIG. 2 shows a minimum structure of the forgery prevention structure 10. Another layer may be disposed on the conductive layer 16 or below the base member 17, or another layer may be disposed between the conductive layer 16 and the base member 17 as long as the characteristics of the conductive layer 16 with respect to terahertz electromagnetic wave are not hindered.

The thin-film-like forgery prevention structure 10 can be embedded in a medium such as a coupon to be subjected to the forgery prevention, or may be adhered on the medium. The forgery prevention structure 10 may be formed such that both the conductive layer 16 and the base member 17 are newly provided, or a medium such as a coupon is used as the base member 17 and the conductive layer 16 is formed directly on the medium.

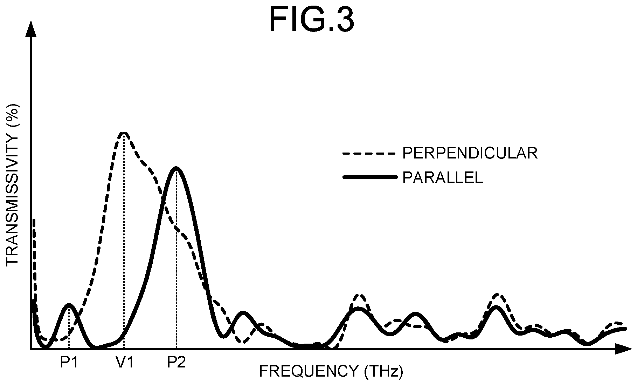

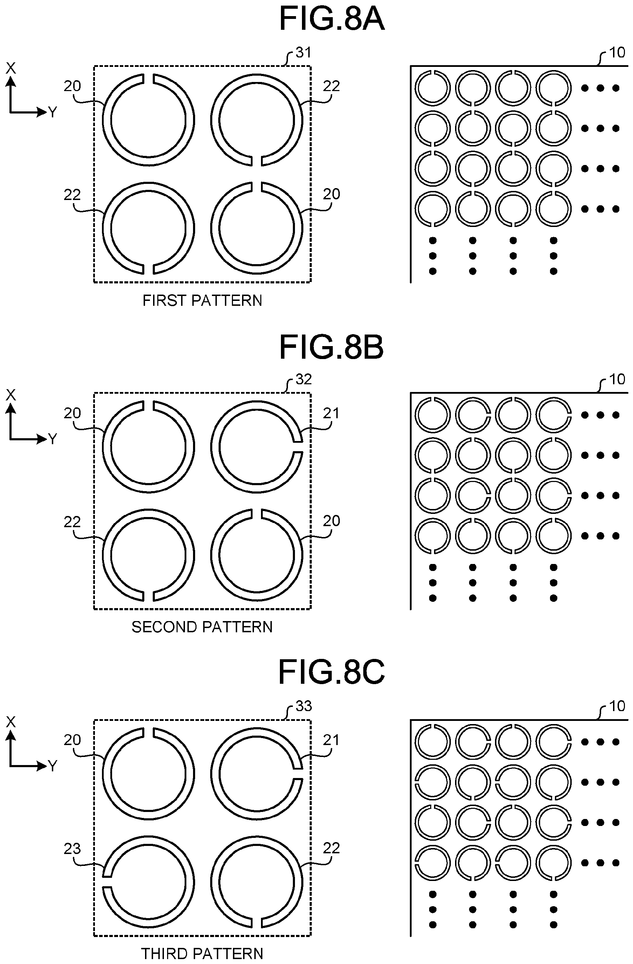

Next, the order of the resonance frequency will be described. FIG. 3 illustrates an example of frequency characteristics of transmissivity which are obtained by irradiating a terahertz electromagnetic wave to a region in which the SRRs are disposed. When multiple SRRs having the open parts are arranged at regular intervals as shown in FIG. 8 in an area that is sufficiently wider than an area irradiated with a terahertz electromagnetic wave, the frequency characteristics shown in FIG. 3 are obtained.

When the polarization direction of the terahertz electromagnetic wave irradiated to the area and the direction of the open parts of the SRRs formed in the irradiated area are the same, that is, parallel to each other, the frequency characteristics indicated by a solid line in FIG. 3 are obtained. Meanwhile, when the polarization direction of the terahertz electromagnetic wave irradiated to the area and the direction of the open parts of the SRRs formed in the area are perpendicular to each other, the frequency characteristics indicated by a broken line in FIG. 3 are obtained. Specifically, for example, in a case where the direction of the open parts of the SRRs is the X-axis direction, the frequency characteristics indicated by the solid line are obtained when the polarization direction of the terahertz electromagnetic wave is the X-axis direction, and the frequency characteristics indicated by the broken line are obtained when the polarization direction thereof is the Y-axis direction.

When the direction of the open parts of the SRRs and the polarization direction of the terahertz electromagnetic wave are the same, two clear peaks P1, P2 are observed as indicated by the solid line in FIG. 3. Meanwhile, when the direction of the open parts of the SRRs and the polarization direction of the terahertz electromagnetic wave are perpendicular to each other, one clear peak V1 is observed as indicated by the broken line in FIG. 3. The frequencies at which the respective peaks are obtained are P1, V1, and P2 in the ascending order.

As described above, the frequency (predetermined frequency) of the terahertz electromagnetic wave is preferably a resonance frequency at which change of a transmissivity is great when the direction of the open parts of the SRRs is changed with respect to the polarization direction (predetermined direction) of the terahertz electromagnetic wave. When comparing a ratio between a transmissivity (solid line) for the X polarized light and a transmissivity (broken line) for the Y polarized light for the peaks P1, V1 and P2, the peaks at which the ratio is great are P1 and V1. In order to compare transmissivities when a terahertz electromagnetic wave having a predetermined polarization direction is irradiated to the SRRs, the peak P1 and the peak V1 are preferably used. Therefore, in the present embodiment, examples, in which the frequency at the peak P1 is a primary resonance frequency and the frequency at the peak V1 is a secondary resonance frequency, are described below. The primary resonance frequency may be in a frequency band that includes the frequency at the peak P1 and the neighboring frequencies, and the secondary resonance frequency may be in a frequency band that includes the frequency at the peak V1 and the neighboring frequencies, as described above.

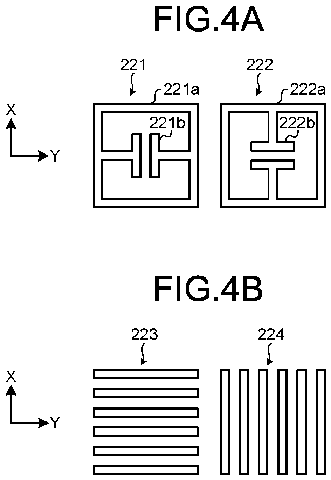

Next, an example of the resonator structure other than the SRR will be described. FIGS. 4A and 4B illustrate other shapes of the resonator structure. FIG. 4A illustrates examples of LC resonators 221, 222 that include coil portions 221a, 222a and capacitor portions 221b, 222b. FIG. 4B illustrates examples of slit resonators 223, 224 that include a plurality of slits. The LC resonators 221, 222 and the slit resonators 223, 224 may also be each formed by a sheet of a conductive material being cut out to form the shape shown in FIGS. 4A and 4B or by the conductive material being formed into the shape shown in FIGS. 4A and 4B on a sheet of an insulating material, similarly to the SRR. The transmissivity in the resonator structures is similar to the transmissivity in the SRR in that, when the sheet of the conductive material is cut out to form the resonator structure, a transmissivity of a terahertz electromagnetic wave with which the resonator structure resonates indicates a value higher than a transmissivity of a terahertz electromagnetic wave with which the resonator structure does not resonate. Meanwhile, when the resonator structure is obtained by forming the conductive material on the sheet of the insulating material, a transmissivity of a terahertz electromagnetic wave with which the resonator structure resonates indicates a value less than a transmissivity of a terahertz electromagnetic wave with which the resonator structure does not resonate.

The LC resonator 221 on the left side in FIG. 4A has a shape in which the quadrangular-ring-like coil portion 221a is connected to the capacitor portion 221b disposed inside the coil portion 221a such that the counter electrode is parallel to the X-axis direction. The LC resonator 221 resonates with the terahertz electromagnetic wave which has the primary resonance frequency (corresponding to P1 in FIG. 3) and has the polarization direction in the X-axis direction, and resonates with the terahertz electromagnetic wave which has the secondary resonance frequency (corresponding to V1 in FIG. 3) and has the polarization direction in the Y-axis direction. Meanwhile, the LC resonator 222 on the right side in FIG. 4A has a shape in which the quadrangular-ring-like coil portion 222a is connected to the capacitor portion 222b disposed inside the coil portion 222a such that the counter electrode is parallel to the Y-axis direction. The LC resonator 222 resonates with the terahertz electromagnetic wave which has the primary resonance frequency (corresponding to P1 in FIG. 3) and has the polarization direction in the Y-axis direction, and resonates with the terahertz electromagnetic wave which has the secondary resonance frequency (corresponding to V1 in FIG. 3) and has the polarization direction in the X-axis direction.

The slit resonator 223 on the left side in FIG. 4B is shaped such that a plurality of linear slits are disposed parallel to the Y-axis direction. The slit resonator 223 resonates with the terahertz electromagnetic wave having the polarization direction in the X-axis direction in a wide range of resonance frequencies including the primary resonance frequency (corresponding to P1 in FIG. 3) and the secondary resonance frequency (corresponding to V1 in FIG. 3), unlike the SRR and the LC resonator. Meanwhile, the slit resonator 224 on the right side in FIG. 4B is shaped such that a plurality of linear slits are disposed parallel to the X-axis direction. The slit resonator 224 also resonates with the terahertz electromagnetic wave having the polarization direction in the Y-axis direction in a wide range of resonance frequencies including the primary resonance frequency (corresponding to P1 in FIG. 3) and the secondary resonance frequency (corresponding to V1 in FIG. 3).

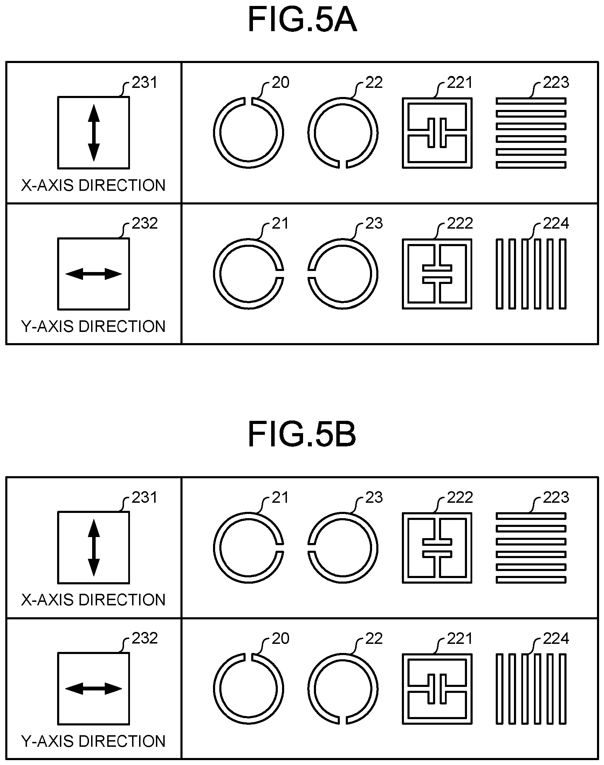

FIGS. 5A and 5B each shows a relationship between the polarization direction of the terahertz electromagnetic wave and the resonator structures. FIG. 5A shows a relationship between the polarization direction of the terahertz electromagnetic wave and the resonator structures designed to resonate at the same primary resonance frequency. FIG. 5B shows a relationship between the polarization direction of the terahertz electromagnetic wave and the resonator structures designed to resonate at the same secondary resonance frequency.

The SRR 20, the SRR 22, the LC resonator 221, and the slit resonator 223 shown on the upper side in FIG. 5A are the resonator structures that resonate with the terahertz electromagnetic wave which has the primary resonance frequency and has the polarization direction in the X-axis direction, and are represented by a resonator structure 231. Meanwhile, the SRR 21, the SRR 23, the LC resonator 222, and the slit resonator 224 shown on the lower side in FIG. 5A are the resonator structures that resonate with the terahertz electromagnetic wave which has the primary resonance frequency and has the polarization direction in the Y-axis direction, and are represented by a resonator structure 232.

The SRR 21, the SRR 23, the LC resonator 222, and the slit resonator 223 shown on the upper side in FIG. 5B are the resonator structures that resonate with the terahertz electromagnetic wave which has the secondary resonance frequency and has the polarization direction in the X-axis direction, and are represented by the resonator structure 231, as in FIG. 5A. Meanwhile, the SRR 20, the SRR 22, the LC resonator 221, and the slit resonator 224 shown on the lower side in FIG. 5B are the resonator structures that resonate with the terahertz electromagnetic wave which has the secondary resonance frequency and has the polarization direction in the Y-axis direction, and are represented by the resonator structure 232, as in FIG. 5A.

A plurality of kinds of the resonator structures are selected from these resonator structures according to the frequency of the terahertz electromagnetic wave to form a basic pattern, and a plurality of the basic patterns are aligned to form the forgery prevention structure. In this case, the resonance frequency is used for the frequency of the terahertz electromagnetic wave for irradiating the resonator structures, and, in particular, the primary resonance frequency and the secondary resonance frequency are preferably used.

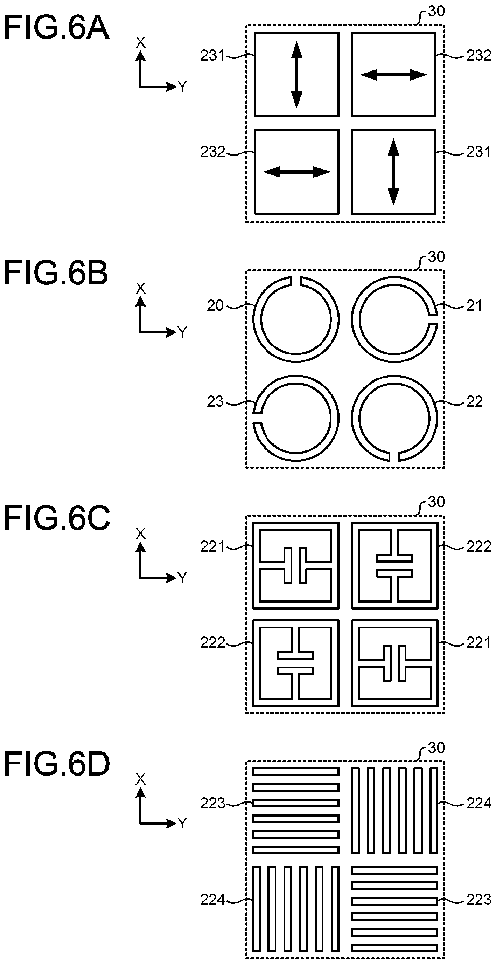

FIGS. 6A to 6D each illustrates a basic pattern 30. For example, the X-direction resonator structure 231 and the Y-direction resonator structures 232 are arranged in two columns and two rows as shown in FIG. 6A, to from the basic pattern 30. When the terahertz electromagnetic wave having the primary resonance frequency is used, the basic pattern 30 can be formed by the SRR 20 and the SRR 22 corresponding to the X-direction resonator structure 231, and the SRR 21 and the SRR 23 corresponding to the Y-direction resonator structure 232, as shown in FIG. 6B. The basic pattern 30 can also be formed by the LC resonators 221 corresponding to the X-direction resonator structure 231 and the LC resonators 222 corresponding to the Y-direction resonator structure 232, as shown in FIG. 6C. The basic pattern 30 can be formed by the slit resonators 223 corresponding to the X-direction resonator structure 231 and the slit resonators 224 corresponding to the Y-direction resonator structure 232, as shown in FIG. 6D.

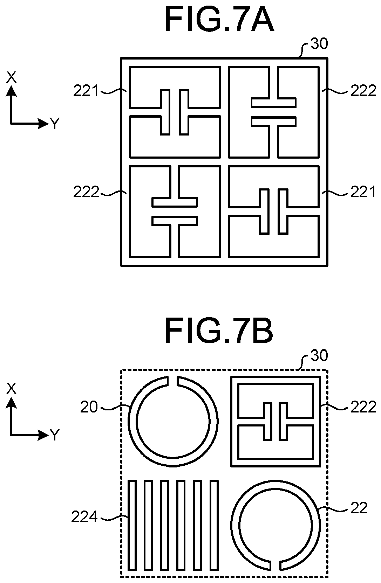

FIGS. 7A and 7B illustrate other examples of the basic patterns 30 other than those shown in FIGS. 6A to 6D. The LC resonators 221, 222 may be shaped such that the ring-shaped coil portion is shared by the resonator structures adjacent to each other as shown in FIG. 7A.

As shown in FIG. 7B, one basic pattern 30 may be formed by the resonator structures including the SRRs 20, 22, the LC resonator 222, and the slit resonator 224. Specifically, the resonator structures selected from the SRR 20, the SRR 22, the LC resonator 221, and the slit resonator 223 shown in FIG. 5A may be used for the X-direction resonator structure 231 which forms the basic pattern. Similarly, the resonator structures selected from the SRR 21, the SRR 23, the LC resonator 222, and the slit resonator 224 may be used for the Y-direction resonator structure 232 which forms the basic pattern. When different resonator structures are thus used, resonance frequencies for the resonator structures are confirmed and adjusted by conducting experiments. Hereinafter, examples of the basic patterns formed by SRRs 20 to 23 will be described. However, the SRRs of each basic pattern may be replaced by other corresponding resonator structures.

FIGS. 8A to 8C illustrate examples of patterns each formed by the SRRs 20 to 23. In each of FIG. 8A to 8C, a pattern as a basic unit is shown on the left side, and a part of the forgery prevention structure 10 formed by arranging this basic pattern repeatedly in a matrix is shown on the right side. Each pattern is a mixed area in which a plurality of kinds of the SRRs 20 to 23 are mixed in a fixed ratio.

A first pattern 31 shown in FIG. 8A is a pattern in two columns and two rows in which one SRR 20 is disposed on the upper left side, one SRR 22 is disposed to right of the SRR 20, one SRR 22 is disposed below the SRR 20, and one SRR 20 is disposed to the right of the SRR 22 on the lower side. The first pattern 31 is a mixed area in which the two kinds of the SRRs 20, 22 are mixed in a fixed ratio. The first pattern 31 is formed merely by the SRRs 20, 22 having the open parts 20a, 22a in the X-axis direction.

When the terahertz electromagnetic wave which has the predetermined frequency (primary resonance frequency) and has the polarization direction in the X-axis direction is irradiated, the transmissivity in the SRRs 20, 22 having the open parts 20a, 22a in the X-axis direction that is the polarization direction becomes maximum. Therefore, the transmissivity of the terahertz electromagnetic wave irradiated to the forgery prevention structure 10 of the first pattern 31 indicates the maximum value when the polarization direction is the X-axis direction.

A second pattern 32 shown in FIG. 8B is a pattern in two columns and two rows in which one SRR 20 is disposed on the upper left side, one SRR 21 is disposed to the right of the SRR 20, one SRR 22 is disposed below the SRR 20, and one SRR 20 is disposed to the right of the SRR 22 on the lower side. The second pattern 32 is a pattern in which the SRR 22 on the upper right side of the first pattern 31 is replaced by the SRR 21. The second pattern 32 is a mixed area in which three kinds of the SRRs 20 to 22 are mixed in a fixed ratio. The second pattern 32 is formed by the three SRRs 20, 22 having the open parts 20a, 22a in the X-axis direction and one SRR 21 having the open part 21a in the Y-axis direction. A ratio of the number of the SRRs 20, 22 in which the directions of the open parts 20a, 22a are parallel to the X-axis direction to the number of the SRRs 21 in which the direction of the open part 21a is perpendicular to the X-axis direction is 3:1. When the SRRs in two columns and two rows are selected from the region in which the SRRs forming the second pattern 32 are continuously arranged as shown on the right side in FIG. 8B, a ratio of the number of the SRRs in which the directions of the open parts are parallel to the X-axis direction to the number of the SRRs in which the directions of the open parts are perpendicular to the X-axis direction is 3:1. That is, when an arbitrary region having the same size as the second pattern 32 is selected, a ratio between the number of the SRRs 20, 22 and the number of the SRRs 21 indicates the same value.

When the terahertz electromagnetic wave which has the predetermined frequency (primary resonance frequency) and has the polarization direction in the X-axis direction is irradiated, the transmissivity in the SRRs 20, 22 having the open parts 20a, 22a in the direction parallel to the polarization direction (X-axis direction) becomes maximum. Meanwhile, the transmissivity in the SRRs 21, 23 having the open parts 21a, 23a in the direction perpendicular to the polarization direction (X-axis direction) becomes minimum.

In a case where a terahertz electromagnetic wave is irradiated to the forgery prevention structure 10 that includes a plurality of kinds of the SRRs having the open parts in different directions, the transmissivity indicates a value between a transmissivity Tx in a case where all the SRRs have open parts in the direction parallel to the polarization direction of the terahertz electromagnetic wave, and a transmissivity Ty in a case where all the SRRs have open parts in the direction perpendicular to the polarization direction of the terahertz electromagnetic wave.

In the forgery prevention structure 10 of the second pattern 32, a ratio of the number of the SRRs in which the directions of the open parts are parallel to the polarization direction (X-axis direction), to the number of the SRRs in which the directions of the open parts are perpendicular to the polarization direction (X-axis direction) is 3:1. Therefore, when the terahertz electromagnetic wave which has the predetermined frequency (primary resonance frequency) and has the polarization direction in the X-axis direction is irradiated to the forgery prevention structure 10 of the second pattern 32, the value of the transmissivity is approximate to (3×Tx+Ty)/4. The size of the area to which the above-described terahertz electromagnetic wave is irradiated is determined such that the wave is irradiated to an area larger than an area including at least the SRRs in two columns and two rows.

A third pattern 33 shown in FIG. 8C is a pattern in two columns and two rows in which one SRR 20 is disposed on the upper left side, one SRR 21 is disposed to the right of the SRR 20, one SRR 23 is disposed below the SRR 20, and one SRR 22 is disposed to the right of the SRR 23 on the lower side. The third pattern 33 is a pattern in which the SRR 22 on the lower left side of the second pattern 32 is replaced by the SRR 23, and the SRR 20 on the lower right side of the second pattern 32 is replaced by the SRR 22. The third pattern 33 is a mixed area in which the four kinds of the SRRs 20 to 23 are mixed in a fixed ratio. The third pattern 33 is formed by the two SRRs 20, 22 having the open parts 20a, 22a in the X-axis direction, and the two SRRs 21, 23 having the open parts 21a, 23a in the Y-axis direction. A ratio of the number of the SRRs 20, 22 in which the directions of the open parts 20a, 22a are parallel to the X-axis direction to the number of the SRRs 21, 23 in which the direction of the open part 21a, 23a is perpendicular to the X-axis direction is 1:1. When the SRRs in two columns and two rows are selected from a region in which the SRRs forming the third pattern 33 are continuously arranged as shown on the right side in FIG. 8C, a ratio of the number of the SRRs in which the directions of the open parts are parallel to the X-axis direction to the number of the SRRs in which the directions of the open parts are perpendicular to the X-axis direction is 1:1. That is, when an arbitrary region having the same size as the third pattern 33 is selected, a ratio between the number of the SRRs 20, 22 and the number of the SRRs 21, 23 indicates the same value. The forgery prevention structure 10 shown in FIG. 1 is formed by the third pattern 33 shown in FIG. 8C.

In a case where a terahertz electromagnetic wave which has the predetermined frequency (primary resonance frequency) and has the polarization direction in the X-axis direction is irradiated to the forgery prevention structure 10 of the third pattern 33, the transmissivity indicates a value between a transmissivity Tx in a case where all the SRRs have the open parts in the direction parallel to the polarization direction (X-axis direction), and a transmissivity Ty in a case where all the SRRs have the open parts in the direction perpendicular to the polarization direction (X-axis direction). In the third pattern 33, a ratio of the number of the SRRs in which the directions of the open parts are parallel to the polarization direction (X-axis direction) to the number of the SRRs in which the directions of the open parts are perpendicular to the polarization direction (X-axis direction) is 1:1. Therefore, the value of the transmissivity is approximate to (Tx+Ty)/2. The size of the area to which the above-described terahertz electromagnetic wave is irradiated is determined such that the wave is irradiated to an area larger than an area including at least the SRRs in two columns and two rows.

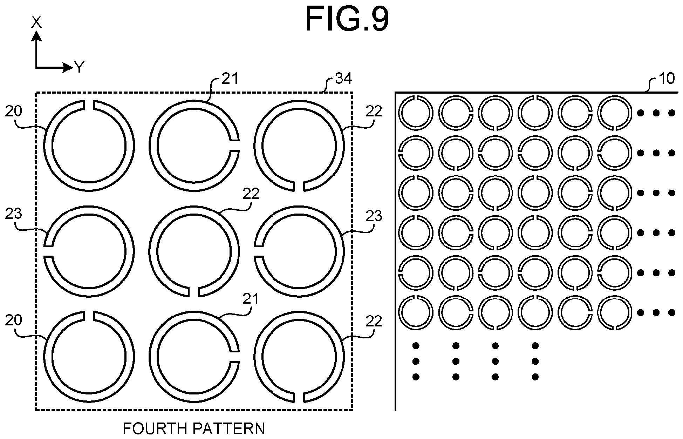

The pattern formed by the four kinds of the SRRs 20 to 23 is not limited to the pattern formed by the SRRs in two columns and two rows. FIG. 9 illustrates another example of the pattern formed by the SRRs 20 to 23. In FIG. 9, a fourth pattern 34 as the basic unit is shown on the left side, and a part of the forgery prevention structure 10 formed by arranging the fourth pattern 34 repeatedly in a matrix is shown on the right side.

The fourth pattern 34 shown in FIG. 9 is formed such that nine SRRs 20 to 23 are arranged in three columns and three rows. The SRR 22 is disposed at the center, and the SRRs 20 are disposed in the upper-left portion and the lower-left portion adjacent to the SRR 22 in the diagonal direction, and the SRRs 22 are disposed in the upper-right portion and the lower-right portion. The SRRs 23 are disposed to the left of the SRR 22 at the center and to the right thereof, and the SRRs 21 are disposed above and below the SRR 22 at the center. The fourth pattern 34 is a mixed area in which the four kinds of the SRRs 20 to 23 are mixed in a fixed ratio. The fourth pattern 34 is formed by the five SRRs 20, 22 having the open parts 20a, 22a in the X-axis direction and the four SRRs 21, 23 having the open parts 21a, 23a in the Y-axis direction. A ratio of the number of the SRRs 20, 22 in which the directions of the open parts 20a, 22a are parallel to the X-axis direction to the number of the SRRs 21, 23 in which the direction of the open part 21a, 23a is perpendicular to the X-axis direction is 5:4. When the SRRs in three columns and three rows are selected from a region in which the SRRs forming the fourth pattern 34 are continuously arranged as shown on the right side in FIG. 9, a ratio of the number of the SRRs in which the directions of the open parts are parallel to the X-axis direction to the number of the SRRs in which the directions of the open parts are perpendicular to the X-axis direction is 5:4. That is, when an arbitrary region having the same size as the fourth pattern 34 is selected, a ratio between the number of the SRRs 20, 22 and the number of the SRRs 21, 23 indicates the same value.

In a case where the terahertz electromagnetic wave which has the predetermined frequency (primary resonance frequency) and has the polarization direction in the X-axis direction is irradiated to the forgery prevention structure 10 of the fourth pattern 34, the transmissivity indicates a value between a transmissivity Tx in a case where all the SRRs have the open parts in the direction parallel to the polarization direction (X-axis direction) and a transmissivity Ty in a case where all the SRRs have the open parts in the direction perpendicular to the polarization direction (X-axis direction). In the fourth pattern 34, a ratio of the number of the SRRs in which the directions of the open parts are parallel to the polarization direction (X-axis direction), to the number of the SRRs in which the directions of the open parts are perpendicular to the polarization direction (X-axis direction) is 5:4. Therefore, the value of the transmissivity is approximate to (5×Tx+4×Ty)/9. The size of the area to which the above-described terahertz electromagnetic wave is irradiated is determined such that the wave is irradiated to an area larger than an area including at least the SRRs in three columns and three rows.

The basic pattern is thus formed by the SRRs being selected from the four kinds of the SRRs 20 to 23 having the open parts 20a to 23a in the direction parallel or perpendicular to the X-axis direction. The transmissivity of the terahertz electromagnetic wave has a different value by changing, for example, the kinds and the number of the SRRs to be selected. The first pattern 31 to the fourth pattern 34 are set so as to indicate different transmissivities, respectively. The basic patterns set by using the SRRs 20 to 23 are continuously arranged into a matrix, to form the forgery prevention structure 10, whereby the transmissivity is inhibited from changing due to the forgery prevention structure 10 being tilted.

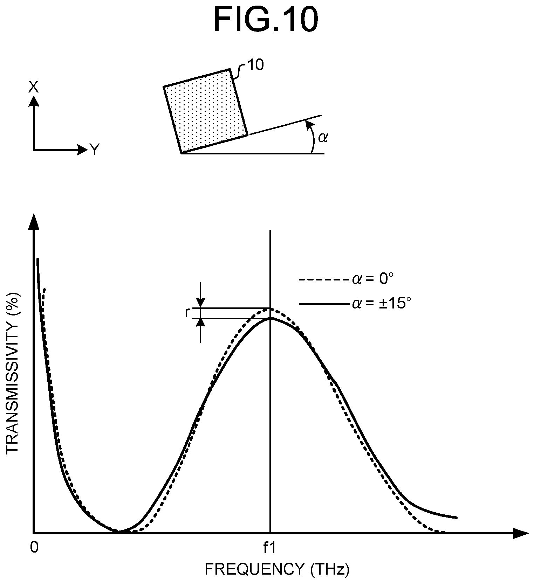

FIG. 10 illustrates an example of a transmissivity at the forgery prevention structure 10. FIG. 10 schematically illustrates, on the lower side, the frequency characteristics in which the transmissivity changes when the terahertz electromagnetic wave having the polarization direction in the X-axis direction is irradiated to the forgery prevention structures 10 of the first pattern 31 to the fourth pattern 34. The horizontal axis represents a frequency of the irradiated terahertz electromagnetic wave, and the vertical axis represents a value of the transmissivity. As shown on the upper side in FIG. 10, α represents an angle by which the forgery prevention structure 10 is tilted. A broken line shown on the lower side in FIG. 10 indicates the frequency characteristics of the transmissivity when the forgery prevention structure 10 is not tilted (α=0 degrees). Meanwhile, a solid line indicates the frequency characteristics of the transmissivity when the forgery prevention structure 10 is tilted by 15 degrees (α=15 degrees). In FIG. 10, r represents variation range in transmissivity at a primary resonance frequency f1 (THz) in a case where the forgery prevention structure 10 is tilted. Even when the forgery prevention structure 10 is tilted, the variation range r of the transmissivity is very small and the absolute value of the transmissivity is not greater than several %.

Specifically, when the terahertz electromagnetic wave which has the primary resonance frequency fl (THz) and has the polarization direction in the X-axis direction is irradiated to the forgery prevention structure 10 in a state where the forgery prevention structure 10 is not tilted (α=0 degrees), the transmissivity of the forgery prevention structure 10 of the first pattern 31 is about 40%. The transmissivity of the forgery prevention structure 10 of the second pattern 32 is about 35%. The transmissivity of the forgery prevention structure 10 of the third pattern 33 is about 30%. The transmissivity of the forgery prevention structure 10 of the fourth pattern 34 is about 30%. In a conventional forgery prevention structure in which an angle between the polarization direction of the terahertz electromagnetic wave and the open part of each SRR is 60 degrees, when the terahertz electromagnetic wave is similarly irradiated, the transmissivity is about 30%.

In a case where the forgery prevention structure 10 is tilted at an angle ranging from -15 to 15 degrees (-15 degrees≤α≤15 degrees), when the terahertz electromagnetic wave is similarly irradiated, the transmissivity varies between about 40% and about 38% in the forgery prevention structure 10 of the first pattern 31, and the variation range of the transmissivity is about 2%. Similarly, the variation range of the transmissivity in the forgery prevention structure 10 of the second pattern 32 is about 1% , the variation range of the transmissivity in the forgery prevention structure 10 of the third pattern 33 is about 0%, and the variation range of the transmissivity in the forgery prevention structure 10 of the fourth pattern 34 is about 0.3%. When the above-describe conventional forgery prevention structure in which the angle of the open parts is 60 degrees is tilted at an angle ranging from -15 to 15 degrees, the angle varies between 45 degrees and 75 degrees, and the variation range of the transmissivity is about 20%.

When the forgery prevention structure 10 is not tiled, the forgery prevention structure 10 of the third pattern 33, the forgery prevention structure 10 of the fourth pattern 34, and the conventional forgery prevention structure have almost the same transmissivity of about 30%. Meanwhile, when the forgery prevention structure is tilted at an angle ranging from -15 to 15 degrees, the variation range of the transmissivity in the conventional forgery prevention structure is about 20% whereas the variation range of the transmissivity in each of the forgery prevention structure 10 of the third pattern 33 and the forgery prevention structure 10 of the fourth pattern 34 is less than 1%. That is, the forgery prevention structure 10 according to the present embodiment can reduce the variation range of the transmissivity when the forgery prevention structure 10 is tilted as compared with a conventional art.

The forgery prevention structure 10 of the first pattern 31 can reduce the variation range of the transmissivity since the variation range with respect to tilting is reduced when the direction of the open part of the SRR is parallel to the polarization direction of the terahertz electromagnetic wave.

The forgery prevention structures 10 of the second pattern 32 to the fourth pattern 34 can reduce the variation range of the transmissivity since a plurality of kinds of the SRRs 20 to 23 having the open parts in different directions in units of 90 degrees are mixed. Specifically, for example, in a case where the terahertz electromagnetic wave having the primary resonance frequency is irradiated, the transmissivity is reduced when the SRR in which the direction of the open part is parallel to the polarization direction of the terahertz electromagnetic wave is tilted, whereas the transmissivity increases when the SRR in which the direction of the open part is perpendicular to the polarization direction is tilted. Therefore, reduction and increase of transmissivity are compensated with each other, thereby reducing the variation range of the transmissivity.

In a case where the SRRs which increase the transmissivity when the forgery prevention structure 10 is tilted relative to the polarization direction of the terahertz electromagnetic wave and the other SRRs which reduce the transmissivity at that time, are mixed, an effect of reducing the variation range of the transmissivity with respect to the tilting can be exerted. Therefore, the kinds of the SRRs of the forgery prevention structure 10 are not limited to the SRRs in which the directions of the open parts are different by 90 degrees. However, by mixing the SRRs in which the directions of the open parts are different by 90 degrees, when the forgery prevention structure 10 irradiated with the terahertz electromagnetic wave is tilted, there are SRRs which increase the transmissivity and other SRRs which reduce the transmissivity, regardless of the polarization direction of the terahertz electromagnetic wave. Therefore, an effect of reducing the variation range of the transmissivity with respect to tilting of the forgery prevention structure 10 regardless of the polarization direction of the terahertz electromagnetic wave can be exerted.

FIG. 8 and FIG. 9 show the examples of the forgery prevention structure 10 in which one pattern of the SRRs selected from the four kinds of the SRRs 20 to 23 is continuously arranged to form a matrix. However, according to the present invention, a plurality of kinds of patterns are combined to form the forgery prevention structure.

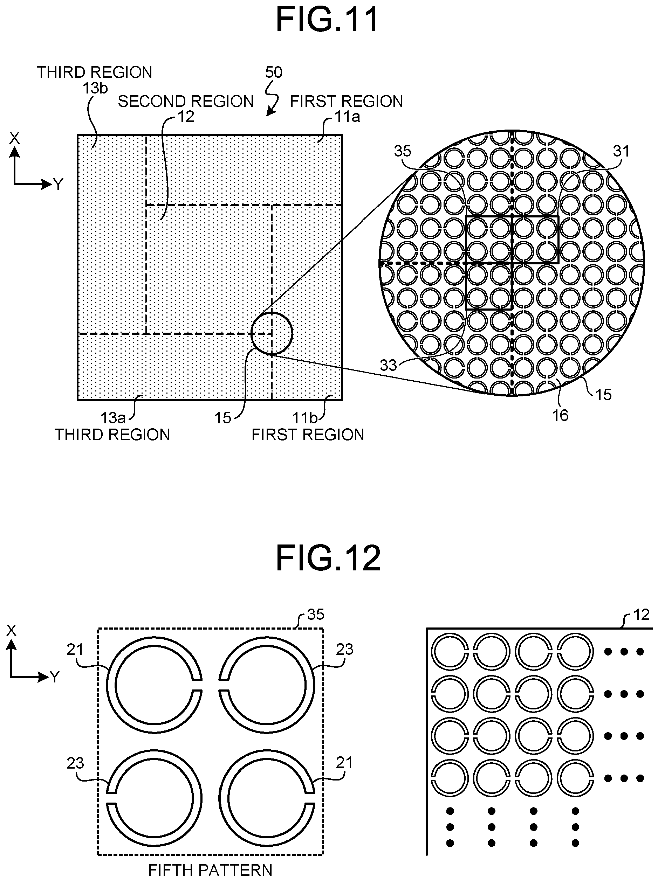

FIG. 11 illustrates an example of a forgery prevention structure 50 , according to the invention, in which a plurality of kinds of patterns are combined. A plan view of the forgery prevention structure 50 that includes a first region 11 (11a, 11b), a second region 12, and a third region 13 (13a, 13b) is shown on the left side, and an enlarged view of a partial region 15 including the three kinds of regions 11 to 13 is shown on the right side. The first region 11 is almost L-shaped, and the third region 13 has such a shape as to rotate the first region 11 by 180 degrees. A region surrounded by the first region 11 and the third region 13 is the second region 12. The sheet-like forgery prevention structure 50 has, for example, a 20 × 20 mm square shape, and the second region 12 is disposed at the center of the forgery prevention structure 50 and has a 10 × 10 mm square shape.

As shown in the partially enlarged view on the right side in FIG. 11, the first region 11 is a region in which the first patterns 31 shown in FIG. 8A are continuously arranged into a matrix. The third region 13 is a region in which the third patterns 33 shown in FIG. 8C are continuously arranged into a matrix.

The second region 12 is formed by a fifth pattern 35 obtained by rotating the first pattern 31 counterclockwise by 90 degrees. FIG. 12 shows a structure of the fifth pattern. In FIG. 12, the fifth pattern 35 as a basic unit is shown on the left side, and a part of the second region 12 formed by arranging the fifth pattern 35 repeatedly in a matrix is shown on the right side. The fifth pattern 35 is a pattern in two columns and two rows in which one SRR 21 is disposed on the upper left side, one SRR 23 is disposed to the right of the SRR 21, one SRR 23 is disposed below the SRR 21, and one SRR 21 is disposed to the right of the SRR 23 on the lower side. The fifth pattern 35 is formed merely by the SRRs 21, 23 having the open parts 21a, 23a in the Y-axis direction.

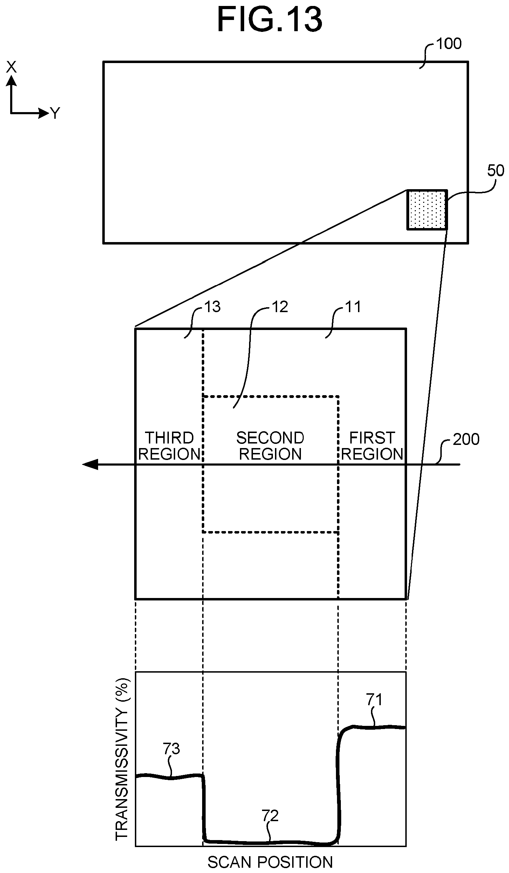

FIG. 13 illustrates change of the transmissivity of the terahertz electromagnetic wave, which is observed in a medium 100 having the forgery prevention structure 50 shown in FIG. 11. In FIG. 13, a plan view of the medium 100 having the forgery prevention structure 50 is shown in the upper portion. The forgery prevention structure 50 having the square shape is disposed such that each side is parallel to a corresponding side of the medium 100 having the rectangular shape. In the mid-portion in FIG. 13, the scan positions and scan direction for scanning the forgery prevention structure 50 by the terahertz electromagnetic wave are indicated by an arrow 200. In the lower portion in FIG. 13, a waveform of a transmissivity of the terahertz electromagnetic wave at the scan positions is shown. The waveform of the transmissivity schematically represents the change of the transmissivity of the terahertz electromagnetic wave of the forgery prevention structure 50 at the primary resonance frequency.

When the medium 100, that is, the forgery prevention structure 50 is not tilted, almost the center portion, in the X-axis direction, of the forgery prevention structure 50 is scanned in the direction indicated by the arrow 200 by the terahertz electromagnetic wave which has the predetermined frequency and has the polarization direction in the X-axis direction. The transmissivity in the first region 11 of the first pattern 31, the transmissivity in the second region 12 of the fifth pattern 35, and the transmissivity in the third region 13 of the third pattern 33 indicate different values according to the patterns, respectively.

For example, at the primary resonance frequency, the transmissivity in the first region 11 indicates a high value (about 40%), and the transmissivity in the second region 12 indicates a very small value (about 2%). The transmissivity in the third region 13 indicates a value (about 20%) between the transmissivity in the first region 11 and the transmissivity in the second region 12. Therefore, as indicated in the lower portion in FIG. 13, a waveform 71 indicating an almost constant high transmissivity is obtained in the first region 11 on the right side, and the transmissivity is then reduced in the second region 12 at the center. A waveform 72 indicating an almost constant transmissivity is obtained in the second region 12, and the transmissivity then increases again in the third region 13 on the left side to obtain a waveform 73 indicating an almost constant transmissivity lower than the waveform 71. Thus, when the forgery prevention structure 50 is formed by a plurality of regions in which different transmissivities are indicated by irradiating a predetermined terahertz electromagnetic wave, a characteristic waveform in which the transmissivity changes by scanning the forgery prevention structure 50 can be obtained. Authentication of the medium 100 can be determined based on the characteristics of the obtained waveform of transmissivity.

Even when the forgery prevention structure 50 is tilted by 15 degrees, variation range of the transmissivity in the first region 11 of the first pattern 31 and the variation range of the transmissivity in the second region 12 are about 2%, and the transmissivity in the third region 13 of the third pattern 33 does not substantially change. Therefore, even when the forgery prevention structure 50 is tilted, a stepwise waveform in which the transmissivity is reduced from the waveform 71 to the waveform 72 and the transmissivity increases from the waveform 72 to the waveform 73, is obtained as shown in the lower portion in FIG. 13. The relationship in value among the waveform 71, the waveform 72, and the waveform 73 does not change. Therefore, in measuring the transmissivity, even when the medium 100, that is, the forgery prevention structure 50 in a tilted state is scanned, a characteristic waveform representing a three-step change of the transmissivity can be obtained. The authentication of the medium 100 can be determined based on the characteristics of the obtained waveform of the transmissivity.

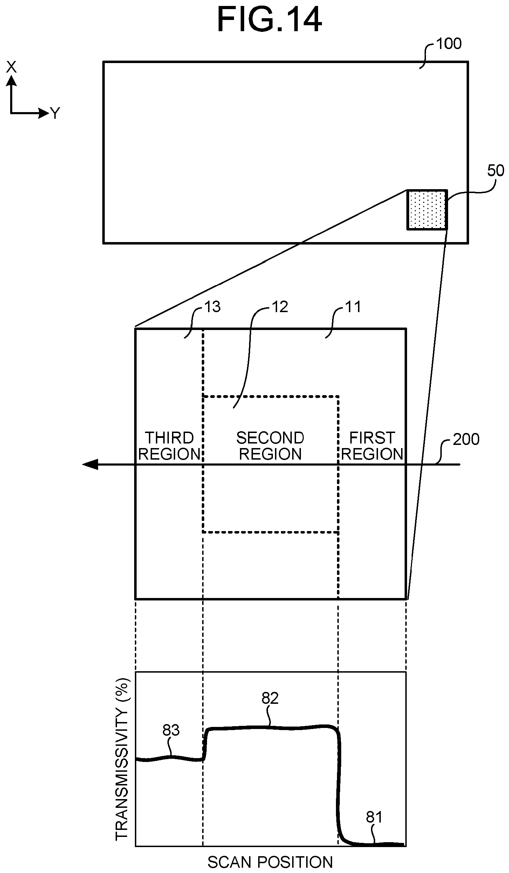

The exemplary case in which the terahertz electromagnetic wave which has the primary resonance frequency (P1 in FIG. 3) and has the polarization direction in the X-axis direction is irradiated to the forgery prevention structure 10, 50 has been mainly described. Transmission characteristics are different at the secondary resonance frequency (V1 in FIG. 3). FIG. 14 illustrates change of a transmissivity obtained at the secondary resonance frequency. In FIG. 14, a plan view of the medium 100, which is the same as shown in FIG. 13, having the forgery prevention structure 50 is shown in the upper portion. In the mid-portion in FIG. 14, the scan positions and the scan direction for scanning the forgery prevention structure 50 by the terahertz electromagnetic wave are presented by an arrow 200. In FIG. 14, a waveform of a transmissivity in the forgery prevention structure 50 at the secondary resonance frequency obtained at the scan positions is shown in the lower portion.

When the medium 100, that is, the forgery prevention structure 50 shown in FIG. 11 is not tilted, almost the center portion, in the X-axis direction, of the forgery prevention structure 50 is scanned in the direction indicated by the arrow 200, by a terahertz electromagnetic wave which has the predetermined frequency and has the polarization direction in the X-axis direction. When the terahertz electromagnetic wave having the primary resonance frequency is used for the scanning, the waveform of the transmissivity shown in the lower portion in FIG. 13 is obtained. When the terahertz electromagnetic wave having the secondary resonance frequency is used for the scanning, the waveform of the transmissivity shown in the lower portion in FIG. 14 is obtained. A relationship between a transmissivity, and the polarization direction of the terahertz electromagnetic wave and the directions of the open parts of the SRRs 20 to 23, changes depending on a resonance mode. At the primary resonance frequency, when the polarization direction of the terahertz electromagnetic wave and the direction of the open part of the SRR are parallel to each other, the transmissivity is maximum. Meanwhile, at the secondary resonance frequency, when the polarization direction of the terahertz electromagnetic wave and the direction of the open part of the SRR are perpendicular to each other, the transmissivity is maximum.

Different transmissivities are obtained among the first region 11 to the third region 13 also at the secondary resonance frequency. The transmissivity indicates a very small value of several % in the first region 11, and the transmissivity indicates a high value in the second region. In the third region 13, the transmissivity indicates a value between the transmissivity in the first region 11 and the transmissivity in the second region 12. Therefore, as shown in the lower portion in FIG. 14, a waveform 81 indicating an almost constant low transmissivity is obtained in the first region 11 on the right side, and the transmissivity then increases in the second region 12 at the center. A waveform 82 indicating an almost constant transmissivity is obtained in the second region 12, and the transmissivity is then reduced again in the third region 13 on the left side, to obtain a waveform 83 indicating an almost constant transmissivity higher than the waveform 81. Authentication of the medium 100 can be determined based on the characteristics of the obtained waveform of the transmissivity.

When the forgery prevention structure 50 is tilted by 15 degrees, the variation range of the transmissivity in the first region 11, the variation range of the transmissivity in the second region 12, and the variation range of the transmissivity in the third region 13 are small, similarly to the primary resonance frequency, and are each about 4%. Therefore, even when the forgery prevention structure 50 is tilted, a stepwise waveform in which the transmissivity increases from the waveform 81 to the waveform 82 is obtained as shown in the lower portion in FIG. 14. A difference between the transmissivity represented by the waveform 82 in the second region 12 and the transmissivity represented by the waveform 83 in the third region 13 is about 15%. When the forgery prevention structure 50 is tilted by 15 degrees, the variation range of the transmissivity in the second region 12 is about 4%, and the transmissivity in the third region 13 does not substantially change. Therefore, also when the forgery prevention structure 50 is tilted, a stepwise waveform in which the transmissivity is reduced from the waveform 82 to the waveform 83 is obtained as shown in the lower portion in FIG. 14, and the relationship in value among the waveform 81, the waveform 82, and the waveform 83 does not change. In measuring the transmissivity, even when the medium 100, that is, the forgery prevention structure 50 in a tilted state is scanned, a characteristic waveform representing a three-step change of the transmissivity can be obtained. The authentication of the medium 100 can be determined based on the characteristics of the obtained waveform of the transmissivity.

In FIG. 13 and FIG. 14, the forgery prevention structure 50 on the medium 100 is scanned by the terahertz electromagnetic wave. This scanning can be performed by the medium 100 being transported in an authentication apparatus in which the terahertz electromagnetic wave is transmitted and received at fixed positions. The authentication apparatus will be described below by using an example where the measurement shown in FIG. 13 is performed.

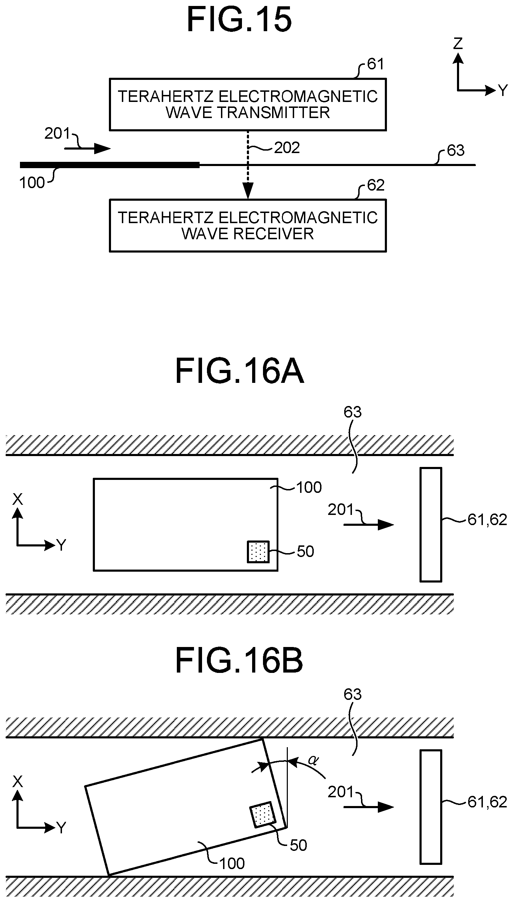

FIG. 15 is a schematic diagram illustrating an internal structure of an authentication apparatus as viewed from the side thereof. A transport unit 63 transports the medium 100 in the direction indicated by an arrow 201. A terahertz electromagnetic wave transmitter 61 is disposed above the transport unit 63. A terahertz electromagnetic wave receiver 62 is disposed below the transport unit 63. The terahertz electromagnetic wave transmitter 61 transmits a terahertz electromagnetic wave which has the predetermined frequency and has the polarization direction in the X-axis direction, in the downward direction as indicated by an arrow 202. The terahertz electromagnetic wave is irradiated to the forgery prevention structure 50 of the medium 100 being transported by the transport unit 63. The terahertz electromagnetic wave receiver 62 receives the terahertz electromagnetic wave transmitted through the forgery prevention structure 50. The terahertz electromagnetic wave is transmitted and received at fixed positions. The terahertz electromagnetic wave receiver 62 detects an intensity of the received terahertz electromagnetic wave, and converts the detected intensity to a transmissivity that represents a ratio relative to the intensity of the terahertz electromagnetic wave detected in a state where the medium 100 is not in the transport unit 63. As shown in FIG. 15, the medium 100 is transported in the direction indicated by the arrow 201 by the transport unit 63, and passes through the positions at which the terahertz electromagnetic wave is transmitted and received. As shown in FIG. 13, the forgery prevention structure 50 is scanned in the direction indicated by the arrow 200, to obtain the waveform of the transmissivity. The transmissivity may be calculated by the terahertz electromagnetic wave receiver 62 or by a controller 64. In the latter case, the terahertz electromagnetic wave receiver 62 outputs the intensity of the received terahertz electromagnetic wave, and the controller 64 calculates the transmissivity.

FIGS. 16A and 16B are schematic diagrams illustrating the structure shown in FIG. 15 as viewed from thereabove. FIG. 16A illustrates the medium 100 being transported in a non-tilted state. FIG. 16B illustrates the medium 100 that is tilted by an angle α and being transported in the skewed state. The transmissivity of the terahertz electromagnetic wave that is transmitted through the forgery prevention structure 50 indicates different values between the state shown in FIG. 16A and the state shown in FIG. 16B, but the variation range of the transmissivity is small. Therefore, authentication of the medium 100 can be determined with high accuracy based on, for example, the value of the transmissivity, and/or a waveform of the transmissivity obtained by scanning the forgery prevention structure 50.

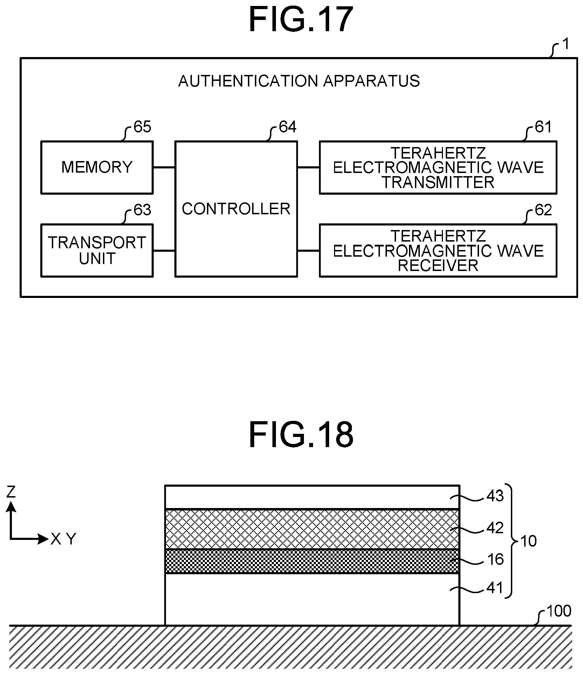

FIG. 17 is a block diagram illustrating a schematic functional configuration of an authentication apparatus 1. The authentication apparatus 1 includes the controller 64 and a memory 65 in addition to the components shown in FIG. 15. The memory 65 is a non-volatile storage unit that includes a semiconductor memory and the like. In the memory 65, data to be obtained by irradiating a predetermined terahertz electromagnetic wave to the forgery prevention structure 50, such as the values of the transmissivities, waveforms of the transmissivities, and the characteristics of the waveforms is prepared in advance as reference data.

The controller 64 controls, for example, transport of the medium 100 by the transport unit 63, and transmission and reception of the terahertz electromagnetic wave by the terahertz electromagnetic wave transmitter 61 and the terahertz electromagnetic wave receiver 62. The controller 64 obtains, for example, the value of the transmissivity of the terahertz electromagnetic wave transmitted through the forgery prevention structure 50, and/or a waveform of the transmissivity. The controller 64 compares at least one of the value of the transmissivity, the waveform of the transmissivity, the characteristics of the waveform, and the like, with the reference data that is prepared in advance in the memory 65, to perform authentication of the medium 100. The controller 64 outputs the result of the authentication to a not-illustrated external apparatus. For example, the result of the authentication is outputted to and displayed on the display unit to notify the result.

For example, the authentication apparatus 1 may be used for inspection of the forgery prevention structure 10 produced on the medium 100 in addition to authentication of the medium 100 having the forgery prevention structure 10. The authentication apparatus 1 may output an intensity, a transmissivity or a reflectivity of the terahertz electromagnetic wave that has been transmitted through or reflected by the forgery prevention structure 10, in addition to outputting the result of the authentication. The authentication apparatus 1 uses the intensity, transmissivity, or reflectivity to inspect the forgery prevention structure 10. Specifically, the intensity, transmissivity, or reflectivity of the terahertz electromagnetic wave to be detected at the inspection is prepared in the memory 65, by using the forgery prevention structure 10 which has been properly produced. In producing the forgery prevention structure 10, a terahertz electromagnetic wave is transmitted by the terahertz electromagnetic wave transmitter 61 and irradiated to the forgery prevention structure 10 to be inspected, and the terahertz electromagnetic wave receiver 62 receives the terahertz electromagnetic wave having been transmitted through or reflected by the forgery prevention structure 10. The intensity, transmissivity, or reflectivity of the terahertz electromagnetic wave which has been thus detected from the forgery prevention structure 10 to be inspected is compared with the reference data, and whether or not the intensity, transmissivity, or reflectivity matches the reference data is determined, that is, whether or not the forgery prevention structure 10 having been produced passes the inspection is determined. Thus, the authentication apparatus 1 may compare the data detected from the forgery prevention structure 10 with the reference data, for pass/fail determination as well as authentication.

FIG. 2 shows an example where the forgery prevention structure 10 is formed by the base member 17 and the conductive layer 16 having the resonator structures such as the SRRs 20 to 23 formed therein. However, the structure of the forgery prevention structure 10 is not limited thereto. FIG. 18 is a schematic cross-sectional view of another structural example of the forgery prevention structure. The forgery prevention structure 10, 50 shown in FIG. 18 has a structure in which the conductive layer 16 shown in FIG. 1 and FIG. 11 is adhered to the surface of the medium 100 through an adhesive layer 41, and a hologram layer 42 and a release layer 43 are formed on the conductive layer 16. For example, the release layer 43, the hologram layer 42, the conductive layer 16, and the adhesive layer 41 are formed in order, respectively, on a predetermined base material, and the release layer 43 and the layers thereabove are removed from the base material, and the layers are inverted upside down, and are adhered to the medium 100 through the adhesive layer 41, to obtain the structure shown in FIG. 18. The release layer 43 is made of a material such as transparent resin. When the forgery prevention structure 10, 50 shown in FIG. 18 is observed from thereabove under visible light, a three-dimensional image recorded in the hologram layer 42 is observed. The resonator structure such as the SRRs 20 to 23 each having an almost C-shape is a micro structure formed in the conductive layer 16 that is a film about several µm thin, and is difficult to visually check. When a layer such as a hologram layer on which a predetermined pattern is observed is formed on the conductive layer 16, the resonator structure such as the SRRs 20 to 23 is more difficult to visually check, thereby improving the forgery preventing effect.

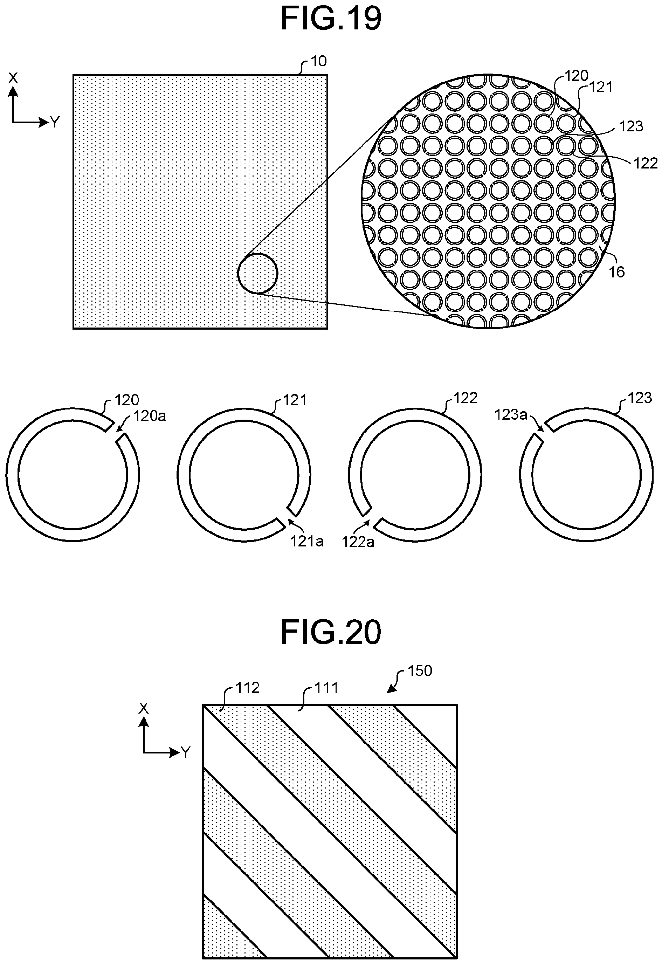

The example where the direction of the open part of the SRR is parallel or perpendicular to the polarization direction of the terahertz electromagnetic wave has been described. However, the direction of the open part is not limited thereto. FIG. 19 illustrates an example of the forgery prevention structure 10 which includes SRRs 120 to 123 having open parts in different directions. The SRRs 120 to 123 shown in FIG. 19 have such shapes in which the SRRs 20 to 23 shown in FIG. 1 have been rotated clockwise by 45 degrees. The angle between each of open parts 120a to 123a and each of the X-axis direction and the Y-axis direction is 45 degrees. Even when the SRRs 20 to 23 used for the first patter 31 to the fifth pattern 35 are replaced by the SRRs 120 to 123 shown in FIG. 19, respectively, the region in which the transmissivity of the terahertz electromagnetic wave indicates a predetermined value can be obtained as described above.

FIG. 11 and FIG. 13 show an example where the medium 100 includes the forgery prevention structure 50 having a rectangular shape, and the directions of the open parts of the SRRs are parallel or perpendicular to the side of the medium 100. However, the angle may be 45 degrees. Specifically, for example, only the forgery prevention structure 50 may be rotated clockwise by 45 degrees without moving the medium 100 shown in FIG. 13. For another example, the SRRs 120 to 123 shown in FIG. 19 may replace the SRRs of the forgery prevention structure 50 in FIG. 13. Also, in this case, as described above, waveforms of different transmissivities of the terahertz electromagnetic wave may be obtained among the first region 11 to the third region 13.

The structure in which the transmissivity changes for each region when the forgery prevention structure 50 is scanned while the medium 100 is transported may be different from the structure shown in FIG. 11. An example of such a forgery prevention structure will be described below.

FIG. 20 shows a forgery prevention structure 150 which is divided into a plurality of regions. The forgery prevention structure 150 having a square shape shown in FIG. 20 is divided into eight regions arranged at regular intervals in the diagonal direction that is diagonal by 45 degrees. The eight regions include two kinds of regions that are first regions 111 and second regions 112 which alternate. For example, the first region 111 and the second region 112 are formed by different patterns, respectively, selected from the first pattern 31 to the fifth pattern 35. For another example, an insulating material, through which a terahertz electromagnetic wave is transmitted, is used as the first region 111 or the first region 111 does not include a conductive material, which blocks a terahertz electromagnetic wave, used for forming SRRs, and only the second region 112 includes the pattern of SRRs selected from the first pattern 31 to the fifth pattern 35. Thus, the forgery prevention structure 150, in which a transmissivity changes between the first region 111 and the second region 112 when almost the center portion in the X-axis direction is scanned in the Y-axis direction by a predetermined terahertz electromagnetic wave, can be obtained. As described above, authentication can be determined based on transmission characteristics of the forgery prevention structure 150.

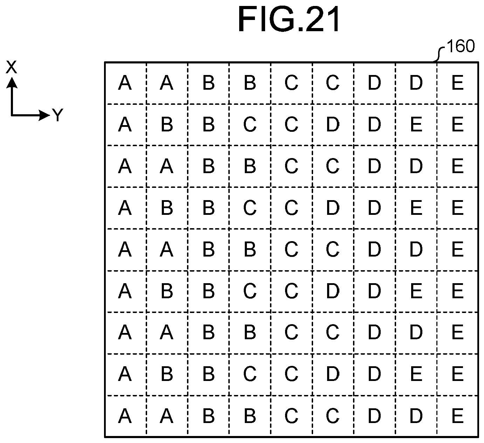

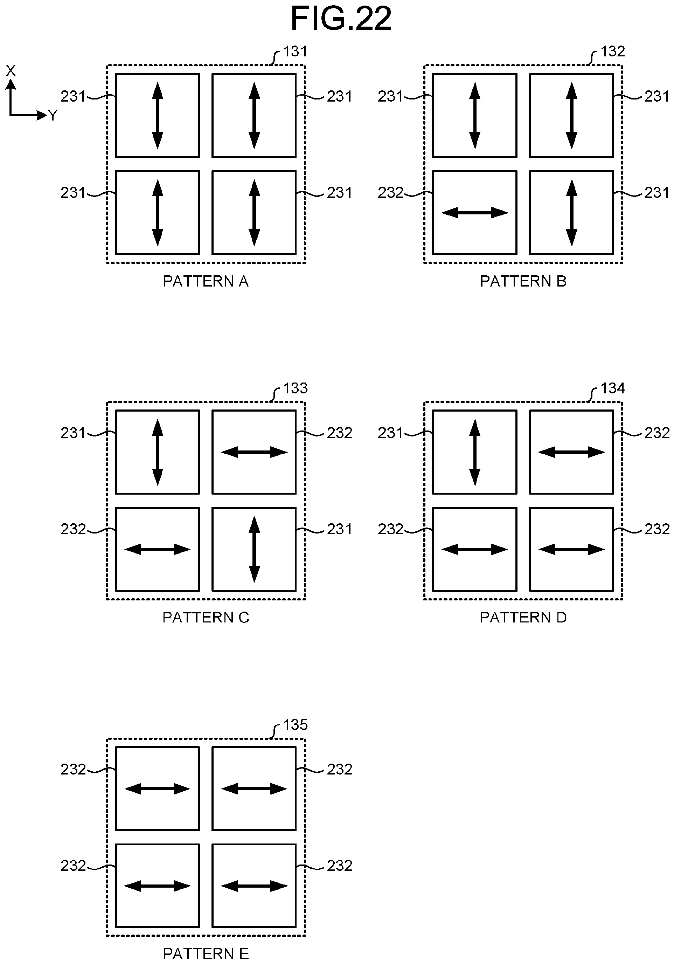

FIG. 21 illustrates an example of a forgery prevention structure 160 in which transmissivity continuously changes. FIG. 22 illustrates kinds of the basic patterns that form the forgery prevention structure 160 shown in FIG. 21. The forgery prevention structure 160 shown in FIG. 21 is formed by five kinds of basic patterns shown in FIG. 22. For example, a region of "A" in FIG. 21 is formed by continuously arranging the pattern A shown in FIG. 22 longitudinally and transversely.

As shown in FIG. 22, in the pattern A, four X-direction resonator structures 231 which resonate with a terahertz electromagnetic wave having the polarization direction in the X-axis direction are arranged in two columns and two rows. A pattern B is formed by one of the four resonator structures forming the pattern A being replaced by the Y-direction resonator structure 232 which resonates with a terahertz electromagnetic wave having the polarization direction in the Y-axis direction. A pattern C includes two X-direction resonator structures 231 and two Y-direction resonator structures 232. The pattern D includes one X-direction resonator structure 231 and three Y-direction resonator structures 232. The pattern E includes the Y-direction resonator structures 232 only.

The forgery prevention structure 160 shown in FIG. 21 is divided into nine portions in each of the X-axis direction and the Y-axis direction and elongated regions are obtained in the forgery prevention structure 160. The region in the left end column is formed of the pattern A only. The region in the second column from the left is formed by the pattern A and the pattern B which alternate in the X-axis direction. The region in the third column is formed of the pattern B only. The region in the fourth column is formed by the pattern B and the pattern C which alternate. The region in the fifth column is formed of the pattern C only. The region in the sixth column is formed by the pattern C and the pattern D which alternate. The region in the seventh column is formed of the pattern D only. The region in the eighth column is formed by the pattern D and the pattern E which alternate. The region in the ninth column is formed of the pattern E only.

The ratio of the number of the X-direction resonator structures 231 included in each pattern is reduced in the order from the pattern A to the pattern E. The ratio of the number of the X-direction resonator structures 231 included in each column is reduced in the order from the left end column to the right end column in the forgery prevention structure 160. Therefore, when the forgery prevention structure 160 is scanned in the Y-axis direction from the left end column to the right end column by the terahertz electromagnetic wave which has the primary resonance frequency and has the polarization direction in the X-axis direction, the waveform of the transmissivity is obtained such that the transmissivity is gradually reduced. Meanwhile, when the forgery prevention structure 160 is similarly scanned by the terahertz electromagnetic wave which has the primary resonance frequency and has the polarization direction in the Y-axis direction, the waveform of the transmissivity is obtained such that the transmissivity gradually increases. Thus, when the forgery prevention structure 160, in which the characteristic transmissivity waveform representing continuously changing transmissivity value is obtained, is provided on a medium, authentication of the medium can be determined.

In the present embodiment, the example where the regions of the forgery prevention structure 50 shown in FIG. 11 have the first pattern 31 and the third pattern 33 shown in FIG. 8 and the fifth pattern 35, has been described. However, the pattern of each region is not particularly limited. For example, the second pattern 32 or the fourth pattern 34 may be used. The forgery prevention structure 50 may be divided into two regions or into four or more partial regions. The example where the fifth pattern 35 formed by the first pattern 31 being rotated by 90 degrees is used as the basic pattern, has been described. However, a pattern formed by the second pattern 32, the third pattern 33, or the fourth pattern 34 being rotated by 90 degrees may be used as the basic pattern.

In the present embodiment, the example where the first pattern 31 to the fifth pattern 35 are used as the basic pattern, has been described. However, the basic pattern is not limited thereto. As long as, when an arbitrary region having the same size as the basic pattern is selected from a region in which the basic pattern is repeatedly arranged to form a matrix, a ratio between the number of the resonator structures, in the selected region, which resonate with a terahertz electromagnetic wave having the polarization direction in the X-axis direction, and the number of the resonator structures, in the selected region, which resonate with a terahertz electromagnetic wave having the polarization direction in the Y-axis direction is equal to the ratio in the basic pattern, the shape of the basic pattern, and the kinds, the number, arrangement positions, and the like of the resonator structures that form the basic pattern are not particularly limited. Specifically, for example, the resonator structures in the basic pattern may be arranged into not only a matrix in which the resonator structure is repeatedly arranged longitudinally and transversely, but also a checkered pattern or a honeycomb pattern. Also, in the method of arranging the basic pattern in each region, the basic pattern may be repeated in any manner. For example, the basic patterns may be arranged into a block pattern or a honeycomb pattern as well as a matrix. The shape of the SRR is not particularly limited as long as the transmissivity can be obtained as desired when a terahertz electromagnetic wave having a predetermined frequency is irradiated. For example, a rectangular ring-like shape may be formed. Another resonator structure may replace the illustrated resonator structure when each of the frequency and the polarization direction of the terahertz electromagnetic wave with which the resonator structure resonates is the same.

In the present embodiment, the example where the polarization direction of the terahertz electromagnetic wave used for authentication is mainly the X-axis direction, has been described. However, the terahertz electromagnetic wave in which the polarization direction is the Y-axis direction may be used. When the polarization direction of the terahertz electromagnetic wave changes, the transmissivity in each basic pattern also changes. However, the authentication can be determined as described above by preparing reference data of the transmissivity corresponding to the polarization direction.

In the present embodiment, the example where a transmissivity of a terahertz electromagnetic wave is used for authentication of the forgery prevention structure, has been described. However, a reflectivity of a terahertz electromagnetic wave may be used. A transmissivity and a reflectivity of a terahertz electromagnetic wave have such a relationship that, when one of the transmissivity and the reflectivity increases, the other thereof is reduced. For example, the structure is changed such that the terahertz electromagnetic wave transmitter 61 and the terahertz electromagnetic wave receiver 62 that are disposed so as to face each other across the transported medium 100 in FIG. 15 are disposed on the same side relative to the medium 100. When the terahertz electromagnetic wave transmitted by the terahertz electromagnetic wave transmitter 61 and reflected by the medium 100 is received by the terahertz electromagnetic wave receiver 62, the reflectivity can be measured. Therefore, also when the reflectivity of the terahertz electromagnetic wave is used, the characteristics of the forgery prevention structure based on the transmissivity of the terahertz electromagnetic wave as described above are obtained and the authentication can be determined.

As described above, when the authentication apparatus according to the above is used, a terahertz electromagnetic wave is irradiated to a forgery prevention medium such as a banknote and a coupon having the forgery prevention structure, and authentication of the forgery prevention medium can be determined based on the transmission characteristics such as the frequency and the transmissivity of the transmitted terahertz electromagnetic wave.

Each of a plurality of kinds of the resonator structures in the forgery prevention structure resonates in some cases and does not resonate in the other cases depending on the frequency and the polarization direction of the terahertz electromagnetic wave to be irradiated to the forgery prevention medium for authentication. By adjusting a ratio between the number of the resonator structures that resonate and the number of the resonator structures that do not resonate, a region through which the terahertz electromagnetic wave having a predetermined frequency is transmitted at a predetermined transmissivity can be obtained. A plurality of regions in which transmissivities are different can be combined to form the forgery prevention structure. Use of a plurality of kinds of the resonator structures in which the polarization directions of the terahertz electromagnetic waves with which the resonator structures resonate are different inhibits the transmissivity from changing when the forgery prevention structure is tilted relative to the polarization direction of the terahertz electromagnetic wave. Thus, high-accuracy authentication with the forgery prevention structure can be performed.

### INDUSTRIAL APPLICABILITY

As described above, the forgery prevention structure, the forgery prevention medium, and the method for inspecting the forgery prevention structure according to the present invention are useful for high-accuracy authentication of a forgery prevention medium having a forgery prevention structure.

### DESCRIPTION OF THE REFERENCE CHARACTERS

1 Authentication apparatus
10, 50, 150, 160 Forgery prevention structure
20 to 23, 120 to 123 Split ring resonator (SRR)
16 Conductive layer
17 Base member
41 Adhesive layer
42 Hologram layer
43 Release layer
61 Terahertz electromagnetic wave transmitter
62 Terahertz electromagnetic wave receiver
63 Transport unit
64 Controller
65 Memory
221, 222 LC resonator
223, 224 slit resonator

## Claims

1. A forgery prevention structure (50) suitable to be formed on a medium (100) and being suitable for authenticating said medium , the forgery prevention structure (50) comprising:
a mixed area (31 to 33) in which a plurality of kinds of resonator structures (231, 232) are arranged such that the resonator structures (231, 232) are mixed in a predetermined ratio, wherein a first kind of resonator structure (231) is arranged to resonate with a first terahertz electromagnetic wave having a first polarization direction, and a second kind of resonator structure (232) is arranged to resonate with a second terahertz electromagnetic wave having a second polarization direction, the first polarization direction being different than the second polarization direction,
**characterized in that**
the medium (100) comprises a plurality of regions that exhibit different transmissivities when irradiated with an inspection terahertz electromagnetic wave having a predetermined frequency and a predetermined polarization direction,
the plurality of regions includes a first region (11) including a first mixed area (31) and a second region (12) including a second mixed area (32),
the first mixed area (31) includes the plurality of kinds of resonator structures (231, 232) mixed in a different ratio from that of the second mixed area (32), and causes a different transmissivity than that caused by the second mixed area (32) on the inspection terahertz electromagnetic wave.

2. The forgery prevention structure according to claim 1, wherein the first terahertz electromagnetic wave and the second terahertz electromagnetic wave have a same frequency.

3. The forgery prevention structure according to claim 1 or 2, wherein an arrangement of the plurality of kinds of resonator structures in each mixed area includes multiple instances of a basic pattern, the basic pattern being a combination of the plurality of kinds of resonator structures in a predetermined arrangement.

4. The forgery prevention structure according to any one of claims 1 to 3, wherein a transmissivity of an inspection terahertz electromagnetic wave having a predetermined frequency and a predetermined polarization direction in each mixed area indicates a constant value based on a ratio of each of the plurality of kinds of resonator structures.

5. The forgery prevention structure according to any one of claims 1 to 4, wherein the first polarization direction is different than the second polarization direction by substantially 90 degrees.

6. The forgery prevention structure according to any one of claims 1 to 5, further comprising a hologram layer having a predetermined pattern observed under visible light.

7. The forgery prevention structure according to any one of claims 1 to 6, wherein the forgery prevention structure is formed in or on a banknote.

8. A forgery prevention medium having the forgery prevention structure according to any one of claims 1 to 6.

9. A method for inspecting a forgery prevention structure (50) formed on a medium (100), the method comprising:
irradiating a mixed area (31 to 33) of the forgery prevention structure (50) with an inspection terahertz electromagnetic wave, the mixed area (31 to 33) including a plurality of kinds of resonator structures (231, 232) that are arranged such that the resonator structures (231, 232) are mixed in a predetermined ratio, a first kind of resonator structure (231) being arranged to resonate with a first terahertz electromagnetic wave having a first polarization direction, and a second kind of resonator structure (232) being arranged to resonate with a second terahertz electromagnetic wave having a second polarization direction, the first polarization direction being different than the second polarization direction;
detecting levels of the inspection terahertz electromagnetic wave that have been reflected or transmitted; and
comparing a detected intensity, transmissivity, or reflectivity of the inspection terahertz electromagnetic wave with previously stored reference data to determine whether the medium (100) is a forgery
**characterized in that**
the medium (100) comprises a plurality of regions that exhibit different transmissivities when irradiated with an inspection terahertz electromagnetic wave having a predetermined frequency and a predetermined polarization direction,
the plurality of regions includes a first region (11) including a first mixed area (31) and a second region (12) including a second mixed area (32),
the first mixed area (31) includes the plurality of kinds of resonator structures (231, 232) mixed in a different ratio from that of the second mixed area (32), and causes a different transmissivity than that caused by the second mixed area (32) on the inspection terahertz electromagnetic wave.

10. The method of claim 9, wherein the medium (100) is a banknote and the comparing includes detecting whether the banknote is a forgery.

## Patentansprüche

1. Fälschungsschutzstruktur (50), die geeignet ist, auf einem Medium (100) (100) ausgebildet zu werden und die zum Authentifizieren des Mediums geeignet ist, wobei die Fälschungsschutzstruktur (50) umfasst:
einen gemischten Bereich (31 bis 33), in dem mehrere Arten von Resonatorstrukturen (231, 232) so angeordnet sind, dass die Resonatorstrukturen (231, 232) in einem vorbestimmten Verhältnis gemischt sind, wobei eine erste Art von Resonatorstruktur (231) angeordnet ist, um mit einer ersten elektromagnetischen Terahertz-Welle mit einer ersten Polarisationsrichtung in Resonanz zu treten, und eine zweite Art von Resonatorstruktur (232) angeordnet ist, um mit einer zweiten elektromagnetischen Terahertz-Welle mit einer zweiten Polarisationsrichtung in Resonanz zu treten, wobei die erste Polarisationsrichtung anders ist als die zweite Polarisationsrichtung,
**dadurch gekennzeichnet, dass**
das Medium (100) mehrere Bereiche umfasst, die unterschiedliche Durchlässigkeiten aufweisen, wenn sie mit einer elektromagnetischen Terahertz-Prüfwelle mit einer vorbestimmten Frequenz und einer vorbestimmten Polarisationsrichtung bestrahlt werden,
die Vielzahl von Bereichen einen ersten Bereich (11) mit einem ersten gemischten Bereich (31) und einen zweiten Bereich (12) mit einem zweiten gemischten Bereich (32) umfasst,
der erste gemischte Bereich (31) die Vielzahl von Arten von Resonatorstrukturen (231, 232) enthält, die in einem anderen Verhältnis als beim zweiten gemischten Bereich (32) gemischt sind, und die eine andere Durchlässigkeit verursachen als die, die durch den zweiten gemischten Bereich (32) bezüglich der elektromagnetischen Terahertz-Prüfwelle verursacht wird.

2. Fälschungsschutzstruktur nach Anspruch 1, wobei die erste elektromagnetische Terahertz-Welle und die zweite elektromagnetische Terahertz-Welle dieselbe Frequenz aufweisen.

3. Fälschungsschutzstruktur nach Anspruch 1 oder 2, wobei eine Anordnung der mehreren Arten von Resonatorstrukturen in jedem gemischten Bereich mehrere Instanzen eines Basismusters enthält, wobei das Basismuster eine Kombination der mehreren Arten von Resonatorstrukturen in einer vorgegebenen Anordnung ist.

4. Fälschungsschutzstruktur nach einem der Ansprüche 1 bis 3, wobei eine Durchlässigkeit für eine elektromagnetische Terahertz-Prüfwelle mit einer vorbestimmten Frequenz und einer vorbestimmten Polarisationsrichtung in jedem gemischten Bereich einen konstanten Wert angibt, basierend auf einem Verhältnis von jeder aus der Vielzahl von Arten von Resonatorstrukturen.

5. Fälschungsschutzstruktur nach einem der Ansprüche 1 bis 4, wobei die erste Polarisationsrichtung sich von der zweiten Polarisationsrichtung um im Wesentlichen 90 Grad unterscheidet.

6. Fälschungsschutzstruktur nach einem der Ansprüche 1 bis 5, die ferner eine Hologrammschicht mit einem vorbestimmten unter sichtbarem Licht beobachteten Muster umfasst.

7. Fälschungsschutzstruktur nach einem der Ansprüche 1 bis 6, wobei die Fälschungsschutzstruktur in oder auf einer Banknote ausgebildet ist.

8. Fälschungsschutzmedium mit der Fälschungsschutzstruktur nach einem der Ansprüche 1 bis 6.

9. Verfahren zum Prüfen einer auf einem Medium (100) ausgebildeten Fälschungsschutzstruktur (50), wobei das Verfahren umfasst:
Bestrahlen eines gemischten Bereichs (31 bis 33) der Fälschungsschutzstruktur (50) mit einer elektromagnetischen Terahertz-Prüfwelle, wobei der gemischte Bereich (31 bis 33) mehrere Arten von Resonatorstrukturen (231 , 232) umfasst, die so angeordnet sind, dass die Resonatorstrukturen (231, 232) in einem vorbestimmten Verhältnis gemischt sind, wobei eine erste Art von Resonatorstruktur (231) angeordnet ist, um mit einer ersten elektromagnetischen Terahertz-Welle mit einer ersten Polarisationsrichtung in Resonanz zu treten, und eine zweite Art von Resonatorstruktur (232) angeordnet ist, um mit einer zweiten elektromagnetischen Terahertz-Welle mit einer zweiten Polarisationsrichtung in Resonanz zu treten, wobei die erste Polarisationsrichtung von der zweiten Polarisationsrichtung verschieden ist;
Erfassen von Pegeln der elektromagnetischen Terahertz-Prüfwelle, die reflektiert oder übertragen wurden; und
Vergleichen einer erfassten Intensität, Durchlässigkeit oder Reflektivität der elektromagnetischen Terahertz-Prüfwelle mit zuvor gespeicherten Referenzdaten, um zu bestimmen, ob das Medium (100) eine Fälschung ist,
**dadurch gekennzeichnet, dass**
das Medium (100) mehrere Bereiche umfasst, die unterschiedliche Durchlässigkeiten aufweisen, wenn sie mit einer elektromagnetischen Terahertz-Prüfswelle mit einer vorbestimmten Frequenz und einer vorbestimmten Polarisationsrichtung bestrahlt werden,
die Vielzahl von Bereichen einen ersten Bereich (11) mit einem ersten gemischten Bereich (31) und eine zweite Bereich (12) mit einem zweiten gemischten Bereich (32) umfasst,
der erste gemischte Bereich (31) die Vielzahl von Arten von Resonatorstrukturen (231, 232) enthält, die in einem anderen Verhältnis als beim zweiten gemischten Bereich (32) gemischt sind, und eine andere Durchlässigkeit verursachen als die, die durch den zweiten gemischten Bereich (32) bezüglich der elektromagnetischen Terahertz-Prüfwelle verursacht wird.

10. Verfahren nach Anspruch 9, wobei das Medium (100) eine Banknote ist und das Vergleichen das Erfassen umfasst, ob die Banknote eine Fälschung ist.

## Revendications

1. Structure de prévention de contrefaçon (50) apte à être formée sur un support (100) et étant adaptée à authentifier ledit support, la structure de prévention de contrefaçon (50) comprenant :
une zone mélangée (31 à 33) dans laquelle une pluralité de types de structures de résonateur (231, 232) sont agencés de sorte que les structures de résonateur (231, 232) sont mélangées dans un rapport prédéterminé, dans lequel un premier type de structure de résonateur (231) est agencé pour résonner avec une première onde électromagnétique térahertz ayant une première direction de polarisation, et un deuxième type de structure de résonateur (232) est agencé pour résonner avec une deuxième onde électromagnétique térahertz ayant une deuxième direction de polarisation, la première direction de polarisation étant différente de la deuxième direction de polarisation, **caractérisée en ce que**
le support (100) comprend une pluralité de régions qui présentent des transmissivités différentes lorsqu'elles sont irradiées avec une onde électromagnétique térahertz d'inspection ayant une fréquence prédéterminée et une direction de polarisation prédéterminée,
la pluralité de régions comprend une première région (11) comprenant une première zone mélangée (31) et une deuxième région (12) comprenant une deuxième zone mélangée (32),
la première zone mélangée (31) comprend la pluralité de types de structures de résonateur (231, 232) mélangés dans un rapport différent de celui de la deuxième zone mélangée (32), et provoque une transmissivité différente de celle provoquée par la deuxième zone mélangée (32) sur l'onde électromagnétique térahertz d'inspection.

2. Structure de prévention de contrefaçon selon la revendication 1, dans laquelle la première onde électromagnétique térahertz et la deuxième onde électromagnétique térahertz ont une même fréquence.

3. Structure de prévention de contrefaçon selon la revendication 1 ou 2, dans laquelle un agencement de la pluralité de types de structures de résonateur dans chaque zone mélangée comprend de multiples instances d'un motif de base, le motif de base étant une combinaison de la pluralité de types de structures de résonateur dans un agencement prédéterminé.

4. Structure de prévention de contrefaçon selon l'une quelconque des revendications 1 à 3, dans laquelle une transmissivité d'une onde électromagnétique térahertz d'inspection ayant une fréquence prédéterminée et une direction de polarisation prédéterminée dans chaque zone mélangée indique une valeur constante basée sur un rapport de chacun de la pluralité de types de structures de résonateur.

5. Structure de prévention de contrefaçon selon l'une quelconque des revendications 1 à 4, dans laquelle la première direction de polarisation est différente de la deuxième direction de polarisation de sensiblement 90 degrés.

6. Structure de prévention de contrefaçon selon l'une quelconque des revendications 1 à 5, comprenant en outre une couche d'hologramme ayant un motif prédéterminé observé sous lumière visible.

7. Structure de prévention de contrefaçon selon l'une quelconque des revendications 1 à 6, dans laquelle la structure de prévention de contrefaçon est formée dans ou sur un billet de banque.

8. Support de prévention de contrefaçon ayant la structure de prévention de contrefaçon selon l'une quelconque des revendications 1 à 6.

9. Procédé d'inspection d'une structure de prévention de contrefaçon (50) formée sur un support (100), le procédé comprenant :
l'irradiation d'une zone mélangée (31 à 33) de la structure de prévention de contrefaçon (50) avec une onde électromagnétique térahertz d'inspection, la zone mélangée (31 à 33) comprenant une pluralité de types de structures de résonateur (231, 232) qui sont agencés de sorte que les structures de résonateur (231, 232) sont mélangées dans un rapport prédéterminé, un premier type de structure de résonateur (231) étant agencé pour résonner avec une première onde électromagnétique térahertz ayant une première direction de polarisation, et un deuxième type de structure de résonateur (232) étant agencé pour résonner avec une deuxième onde électromagnétique térahertz ayant une deuxième direction de polarisation, la première direction de polarisation étant différente de la deuxième direction de polarisation ;
la détection des niveaux de l'onde électromagnétique térahertz d'inspection qui ont été réfléchis ou transmis ; et
la comparaison d'une intensité, d'une transmissivité ou d'une réflectivité détectée de l'onde électromagnétique térahertz d'inspection avec des données de référence précédemment stockées pour déterminer si le support (100) est une contrefaçon,
**caractérisé en ce que**
le support (100) comprend une pluralité de régions qui présentent des transmissivités différentes lorsqu'il est irradié avec une onde électromagnétique térahertz d'inspection ayant une fréquence prédéterminée et une direction de polarisation prédéterminée,
la pluralité de régions comprend une première région (11) comprenant une première zone mélangée (31) et une deuxième région (12) comprenant une deuxième zone mélangée (32), la première zone mélangée (31) comprend la pluralité de types de structures de résonateur (231, 232) mélangés dans un rapport différent de celui de la deuxième zone mélangée (32), et provoque une transmissivité différente de celle provoquée par la deuxième zone mélangée (32) sur l'onde électromagnétique térahertz d'inspection.

10. Procédé selon la revendication 9, dans lequel le support (100) est un billet de banque et la comparaison comprend la détection si le billet de banque est une contrefaçon.
